# FASCICULE DE BREVET EUROPEEN

(11) **EP 1 339 642 B1**
(45) Date de publication et mention de la délivrance du brevet: **18.11.2009**
(21) Numéro de dépôt: 01999531.5
(22) Date de dépôt: 03.12.2001
(51) Int. Cl.: C01G 23/00, H01M 4/48

(54) **PROCEDE D'OBTENTION DE PARTICULES A BASE DE LI4TI5O12, LI(4-A)ZATI5O12, OR LI4ZBTI(5-B)O12**
VERFAHREN ZUR HERSTELLUNG VON LI4TI5O12, LI(4-A)ZATI5O12, OR LI4ZBTI(5-B)O12 TEILCHEN
METHODS FOR OBTAINING LI4TI5O12, LI(4-A)ZATI5O12, OR LI4ZBTI(5-B)O12 PARTICLES

(30) Priorité: 05.12.2000 CA 2327370
(43) Date de publication de la demande: 03.09.2003
(73) Titulaire: Hydro-Québec, Montréal, Québec H2Z 1Z2 (CA); Gauthier, Michel, La Prairie, Québec J5R 1E6 (CA); Brochu, Fernand, Longueuil, Québec J4L 3B1 (CA); Guerfi, Abdelbast, Brossard, Québec J4X 1W2 (CA); Massé, Monique, Longueuil, Québec J4L 4T9 (CA); Armand, Michel, Montréal, Québec H3T 1N2 (CA)
(72) Inventeur: ZAGHIB, Karim, Longueuil, Québec J4M 2M7 (CA)
(74) Mandataire: Sueur, Yvette
(86) Numéro de dépôt international: PCT/CA2001/001714
(87) Numéro de publication internationale: WO 2002/046101

(56) Documents cités:
- EP-A- 0 617 474
- US-A1- 2001 031 401
- US-B1- 6 221 531
- PATENT ABSTRACTS OF JAPAN vol. 2000, no. 26, 1 July 2002 (2002-07-01) & JP 2001 243950 A (TOYOTA CENTRAL RES & DEV LAB INC), 7 September 2001 (2001-09-07)

## Description

### DOMAINE DE L'INVENTION

La présente invention est relative à de nouvelles particules à base de Li₄Ti₅O₁₂, à base de Li_{(4-α)}Z_{α}Ti₅O₁₂, ou à base de Li₄Z_{β}Ti_{(5-β)}O₁₂.

La présente invention est également relative à des procédés permettant la préparation de ces particules et à leur utilisation notamment dans le domaine des dispositifs électrochimiques tels que des générateurs électrochimiques.

### ÉTAT DE L'ART

La commercialisation de la batterie lithium-ion par Sony, en 1990, a été rapportée par Nagaura and Tozawa, Prog. Batt. Solar Cells, 9 (1990), 209. Elle a permis une expansion et une percée importante des batteries dans le domaine des portables (téléphone, ordinateur). La technologie des batteries Li-ion est basée sur des électrodes à intercalation de lithium en particulier l'anode qui est constituée de graphite. Lors de la première charge, un film de passivation se forme à la surface du carbone. La chimie et la composition de ce film de passivation est complexe. Le protocole électrochimique de formation de ce film reste un secret industriel. De plus, lors de l'insertion du lithium dans le carbone il y a une variation volumique de 10 % qui induit une discontinuité entre les particules qui fait décoller les interfaces entre l'électrode et l'électrolyte et entre l'électrode et le collecteur de courant.

Une fois intercalé (LiC₆), le potentiel du carbone se rapproche du celui de la déposition du lithium, ce qui rend l'électrode plus réactive. La projection de la petite batterie à une échelle plus grande pour les applications des véhicules hybrides et électriques nécessite une grande quantité d'électrolytes ce qui rend l'aspect sécurité d'autant plus important.

L'oxyde de titane spinel Li₄Ti₅O₁₂ est un matériau pour anode prometteur pour les batteries lithium-ion grâce à son potentiel d'intercalation (K. Zaghib et al., 190 th Electrochemical Society meeting, San Antonio Abs No 93, 1996), cyclabilité, charge-décharge rapide à haut courant telle que décrite par K. Zaghib et al. dans Proceeding on lithium Polymer Batteries, PV96-17, p. 223,) dans The Electrochemical Society Proceeding Series (1996), (K. Zaghib et al, J. Electro chem. Soc. 145, 3135, (1998) et dans J. Power Sources, 81-82 (1999) 300-305). Le coefficient de diffusion du lithium dans Li₄Ti₅0₁₂ est de l'ordre d'une magnitude plus grand que le coefficient de diffusion du lithium dans les carbones (voir à ce sujet K. Zaghib et al, J. Power Sources, 81-82 (1999) 300-305). Cette caractéristique distingue Li₄Ti₅0₁₂ des autres candidats potentiels pour les applications de puissance comme le PNGV et les pulses GSM. Durant l'intercalation du lithium, la structure du Li₄Ti₅0₁₂ ne varie pas en volume, ce qui rend cette électrode très stable et donc sécuritaire. Cette étude a été réalisée par Ozhuku et rapportée dans J. Electrochem. Soc., 140, 2490 (1993), par diffraction X et par microscope à balayage in situ par Zaghib et al (et rapportée dans Proceeding on lithium Polymer Batteries, PV96-17, p. 223, dans The Electrochemical Society Proceeding Series (1996) et dans J. Electro chem. Soc. 145, 3135, (1998).

Le matériau Li₄Ti₅0₁₂ en raison de son absence d'expansion volumique (aussi qualifié de zéro expansion volumique (ZEV)) a pu être facilement utilisé dans les batteries à électrolyte polymère, céramique ou verre, ce qui assure une bonne stabilité en cyclage. De plus, le bon fonctionnement de cette anode à 1,5 V favorise l'utilisation de tout type d'électrolyte liquide tel que carbonate d'éthylène (EC) carbonate de propylène (PC) ou mélange des deux. À ce niveau de potentiel, il n'y a pas de formation de film de passivation à l'électrode ce qui empêche d'une part le dégagement gazeux dû à la réduction de l'électrolyte et d'autre part empêche la perte de capacité. Ce potentiel de fonctionnement augmente la durée de vie de la batterie en particulier pour les applications de type stand-by à cause de son caractère comme électrode sans film de passivation. L'utilisation du Li₄Ti₅0₁₂ comme anode ne demande aucune formation préalable de la batterie.

De plus, dans la configuration de batterie de type métal plastique, une poche secondaire est réservée pour le gaz dû à la décomposition de l'électrolyte lors de l'utilisation du carbone comme anode. Le fait que la batterie avec Li₄Ti₅0₁₂ n'a pas besoin ni de formation ni de poche de réserve pour dégazage réduira le coût de fabrication de la batterie.

La réaction de l'insertion de Li₄Ti₅0₁₂ se fait comme suit;

Li₄Ti₅O₁₂+3Li⁺+ 3e⁻ ↔ Li₇Ti₅O₁₂ (1)

Dans la littérature ( T. Ohzuku, et al, J. Electrochem. Soc., 140, 2490 (1993)) et (J. Schoonman et al, The 198th Meeting of the Electrochemical Society Phenoix, Extend Abstrat No 91, 92 and 98, October 2000) le Li₄Ti₅O₁₂ est mentionné comme pouvant être obtenu par un mélange binaire d'un mélange de LiOH et TiO₂ où la température de synthèse est supérieure à 600°C. Des impuretés de type TiO₂ , Li₂TiO₃ et/ou autres résiduelles dans le mélange, limitent la capacité de l'électrode et limitent la taille des particules.

Dans le document entitulé Solid state lithium ion batteries using carbon or an oxide as negative electrode, J. Electrochem. Soc., Vol. 145, 3135, (1998) K. Zaghib, M. Armand et M. Gauthier décrivent toutes les différentes applications possibles de Li₄Ti₅O₁₂ comme anode ou cathode dans les batteries rechargeables ou supercapaciteurs.

Dans le document "Electrochemistry of anodes in solid-state Li-ion polymer batteries" J. Electrochem. Soc., Vol. 145, No. 9, September 1998 on décrit les performances électrochimiques de batteries lithium ion à l'état solide qui ont été préparées à l'aide d'une électrolyte à base de polymères solides exempts de solvant. Une cellule à base de Li₄Ti₅0₁₂ comme cathode face à un lithium comme anode, à un taux de C/1 délivre 150 *mAh*/*g* ce qui correspond à 97% de l'efficacité de la capacité nominale. La capacité irréversible était élevée lorsqu'on utilisait du carbone comme électrode négative. Cependant, la capacité sacrificielle était très faible lorsqu'on remplaçait le carbone avec le matériau spinelle.

Dans le document *"Electrochemical study of Li₄Ti₅0₁₂ a negative e*/*ectrode for Liion polymer rechargeable batteries*" K. Zaghib et al. mettent en évidence la stabilité électrochimique d'une électrode négative pour des ions lithium contenant Li₄Ti₅0₁₂ du même style que celle décrite dans l'exemple précédent au regard de son coefficient de diffusion chimique pour une structure Li₄Ti₅0₁₂ de type spinelle ce qui donne un coefficient de diffusion d'une valeur de -2.10⁻⁸ cm² .S⁻¹ ce qui donne une valeur supérieure en intensité à celle des électrodes négatives de carbone. Ainsi l'électrode de Li4 Ti₅0₁₂ offre des avantages pour les cellules électrochimiques qui sont la sécurité et la longue durée de vie et la fiabilité.

Le brevet US-A-6.221.531 décrit une structure de type spinelle de formule générale Li[Ti_{1.67}Li_{O.33-y}M_{y}]O₄, avec Y < 0 ≤ 0.33, avec M représentant le magnésium et/ou l'aluminium. Cette structure est présentée comme utile pour constituer une électrode négative pour une cellule électrochimique non aqueuse et dans une batterie non aqueuse comprenant une pluralité de cellules, connectées électriquement, chaque cellule comprenant une électrode négative, une électrolyte et une électrode positive, l'électrode négative étant constituée de cette structure spinelle.

Par EP-0 617 474, il est connu d'utiliser comme matière active d'anode un titanate de lithium répondant à la formule LiₓTi_{y}O4 dans laquelle 0,8≤x≤1 et 1,6≤y≤2,2. L'anode est obtenue par un procédé consistant à soumettre un composé de lithium et un oxyde de titane à un traitement thermique, dans des conditions de chauffage suffisante pour obtenir un produit contenant le titanate de lithium ayant une structure spinelle et répondant à la formule Li_{4/3}Ti_{5/3}O₄· Les précurseurs de Li et de Ti sont utilisés dans une proportion de 0,8/1 à 1/3.

Il existait donc un besoin pour de nouveaux type de particules dépourvues des limitations et/ou inconvénients communément associés aux particules de l'art antérieur précédemment mentionnées et permettant notamment la réalisation de dispositifs électrochimiques performants, stables au cyclage, d'un épandage facile sur un support tel qu'une électrode, d'une bonne flexibilité quant à l'épaisseur de l'électrode que l'on souhaite préparer à l'aide ces particules.

### DANS LES DESSINS

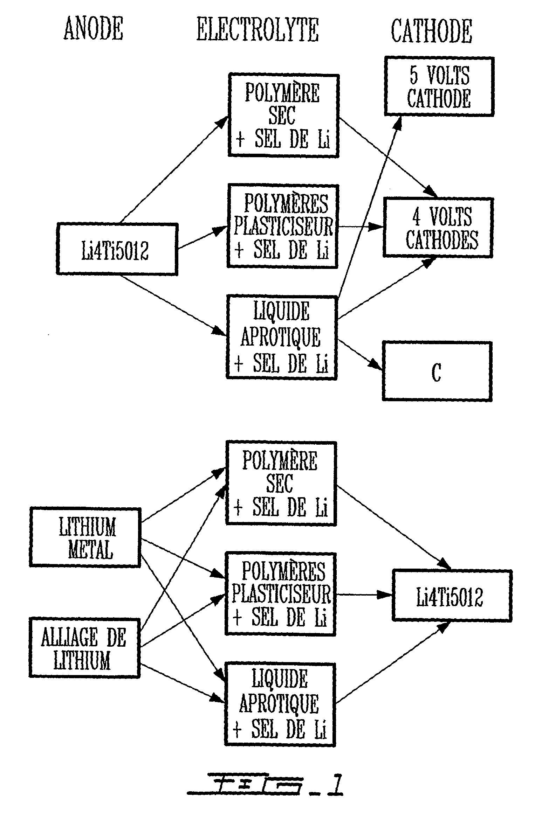

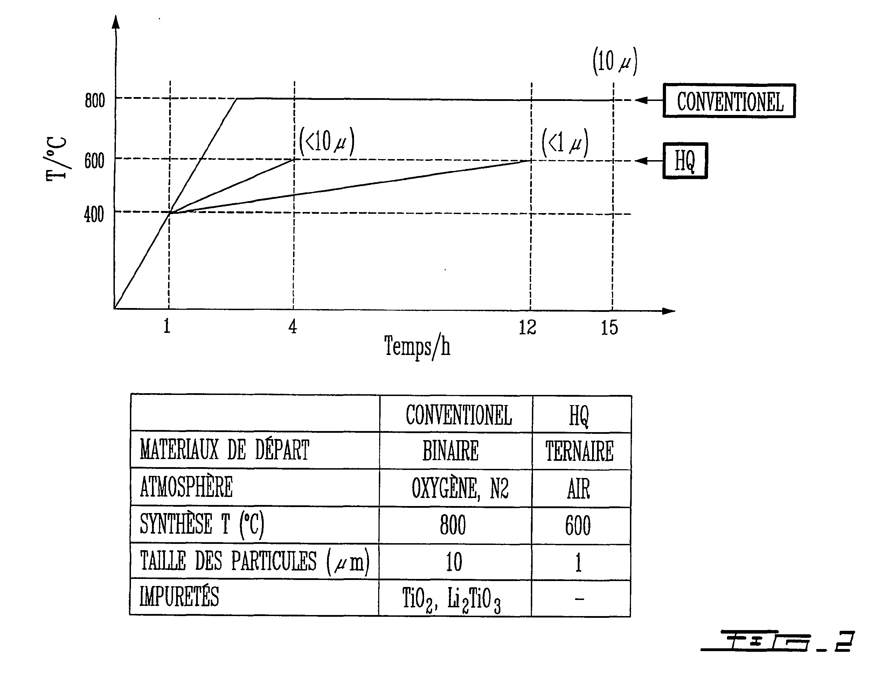

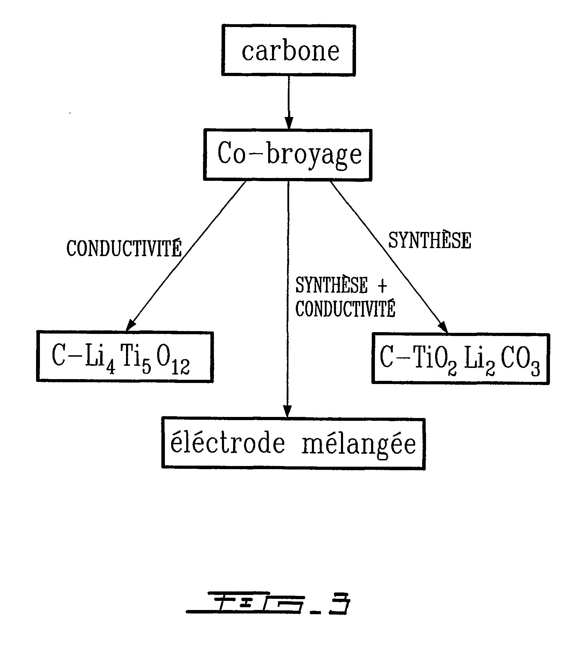

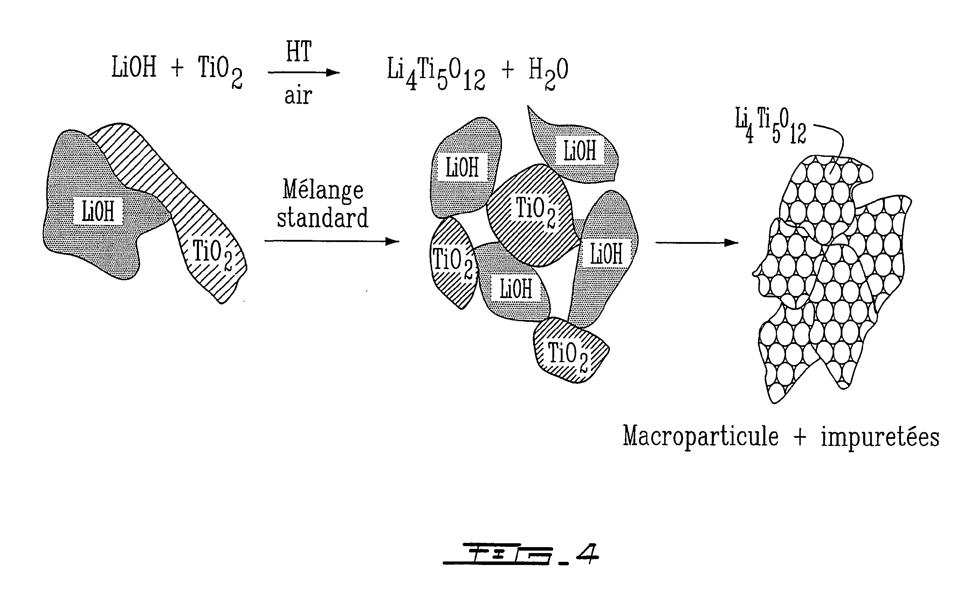

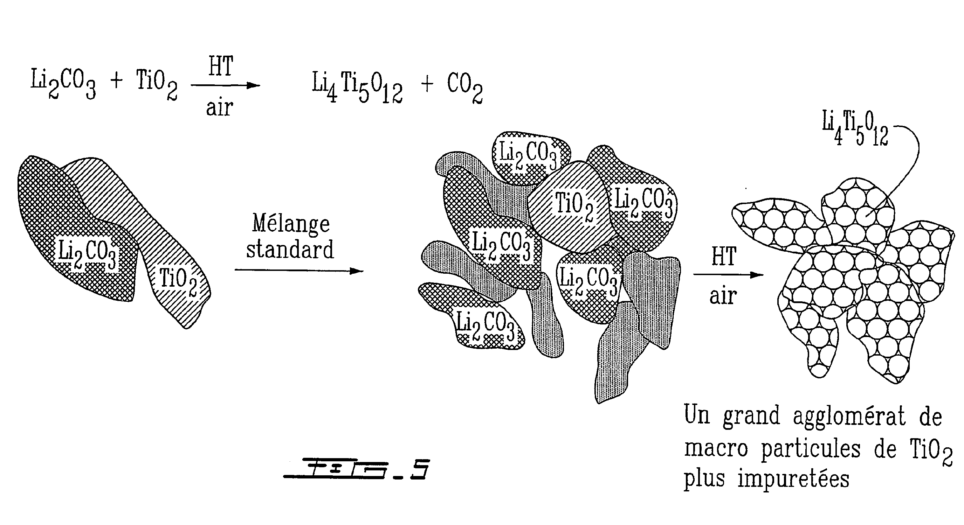

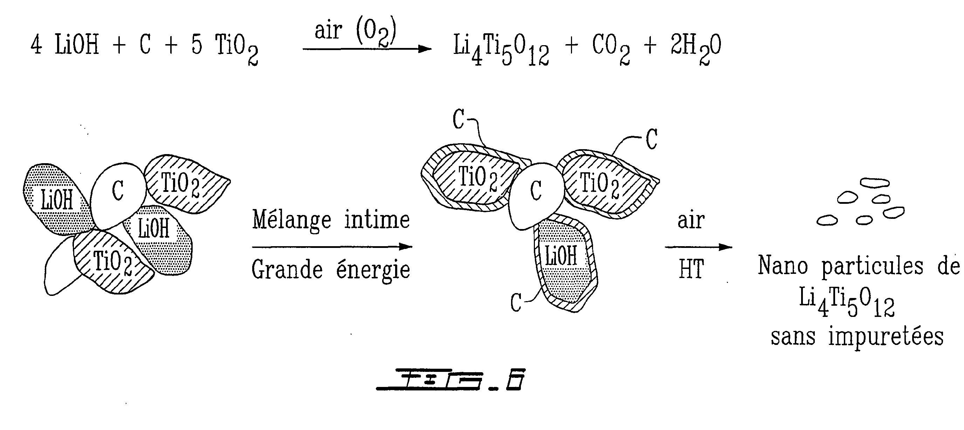

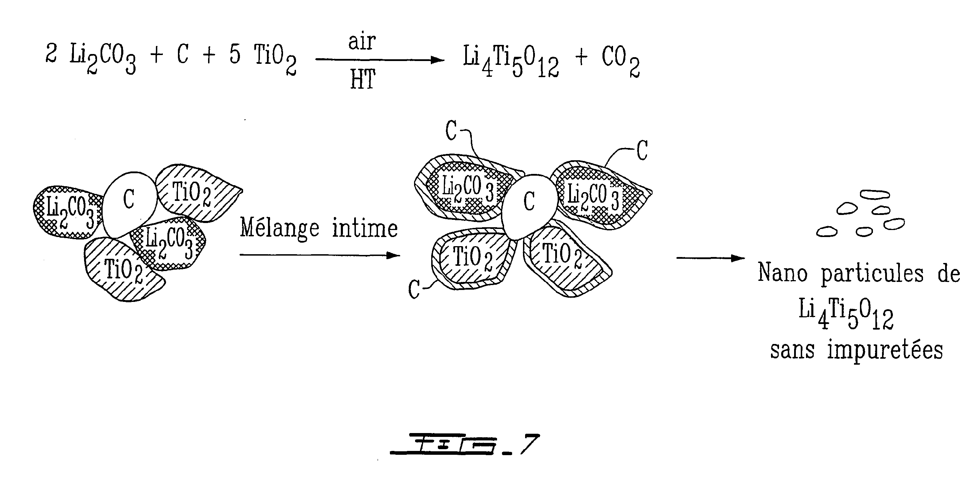

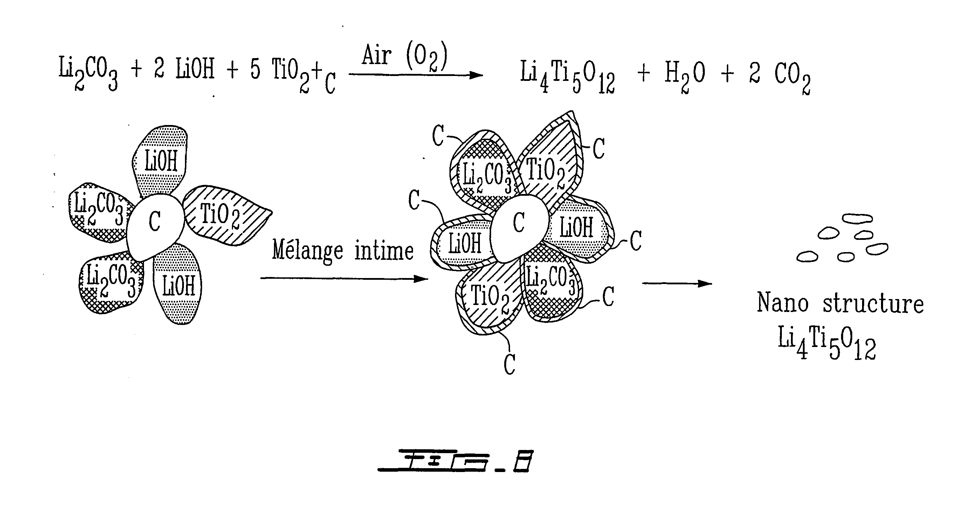

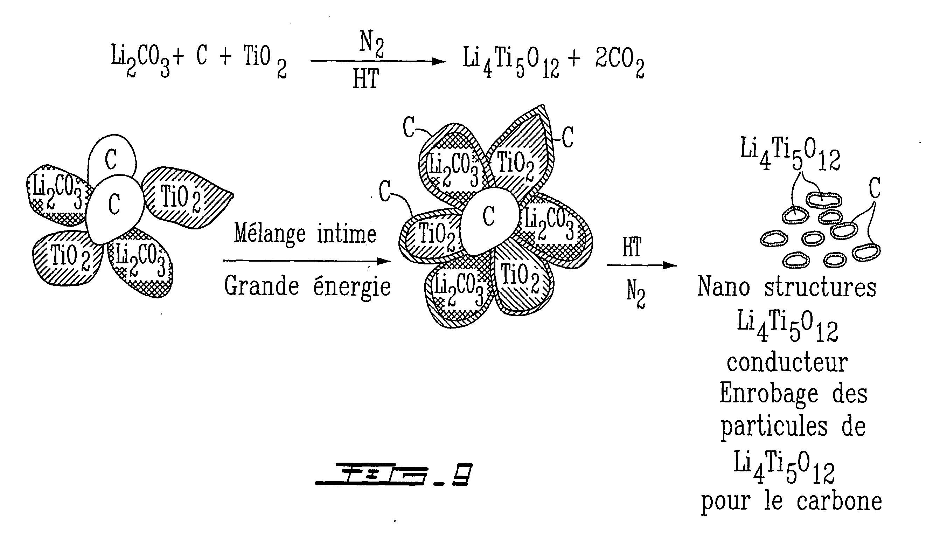

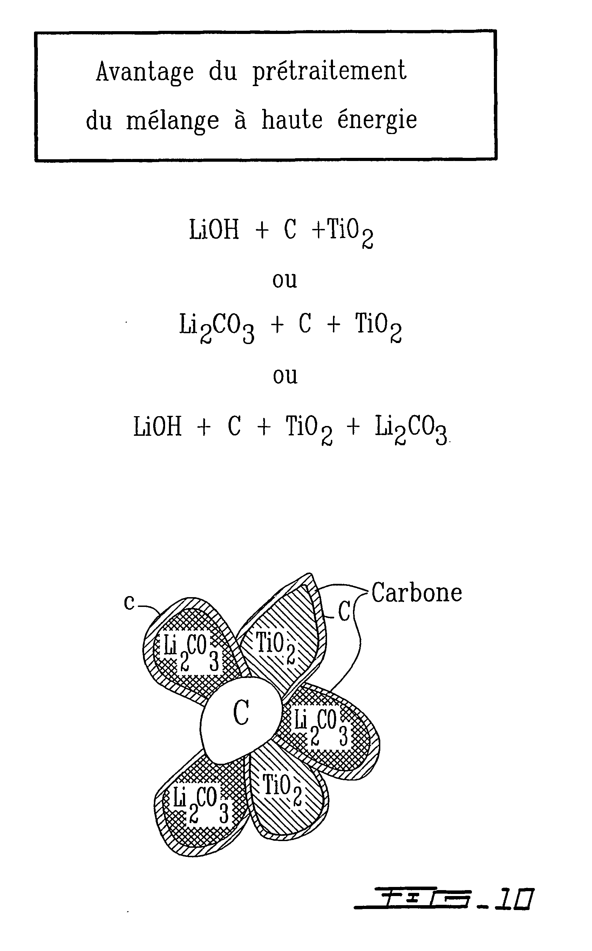

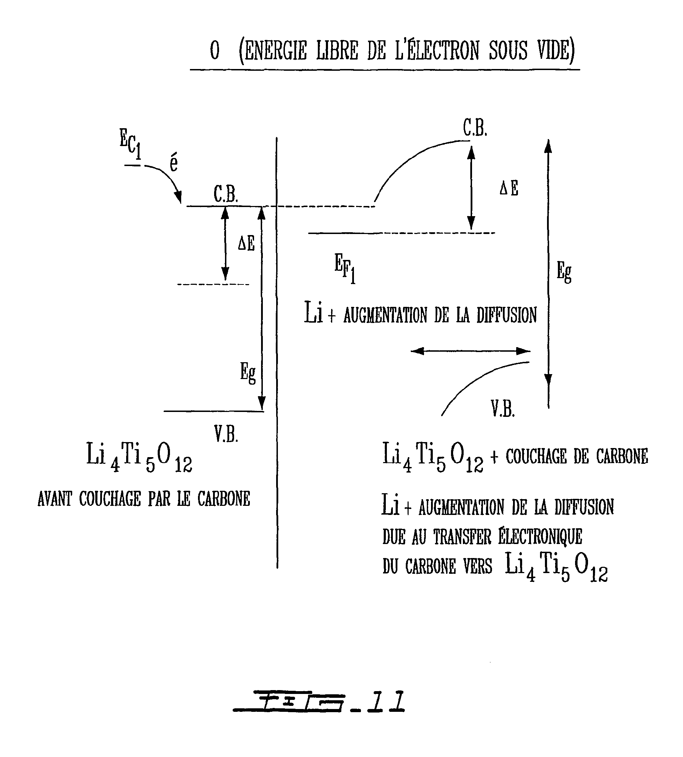

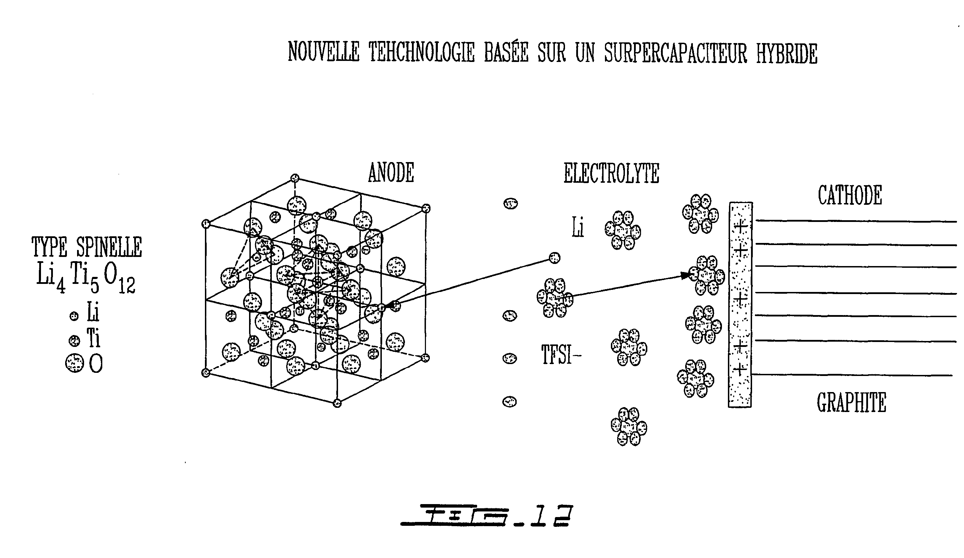

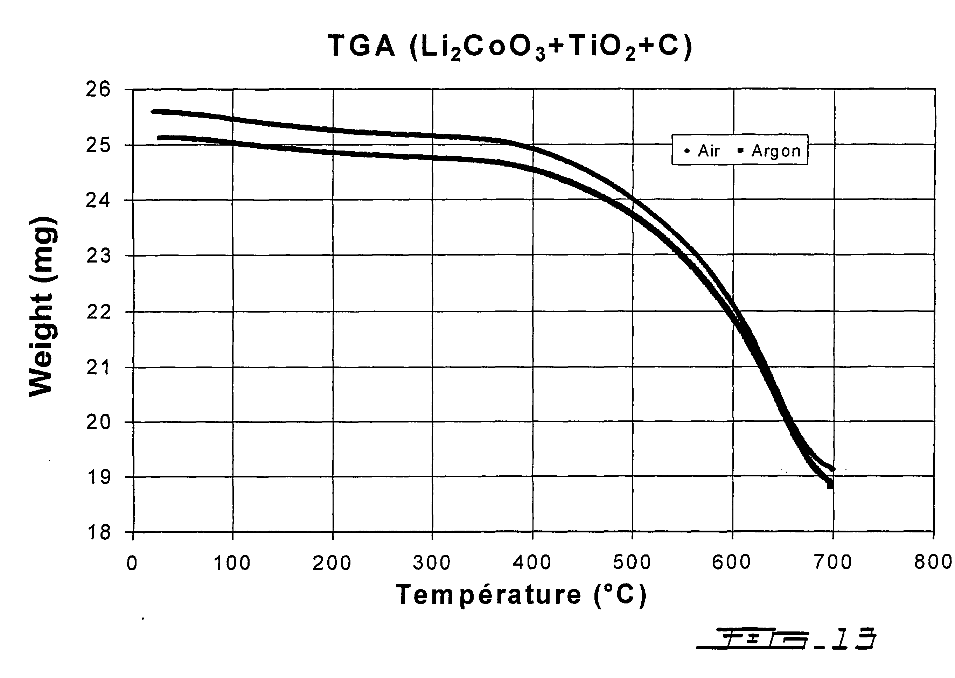

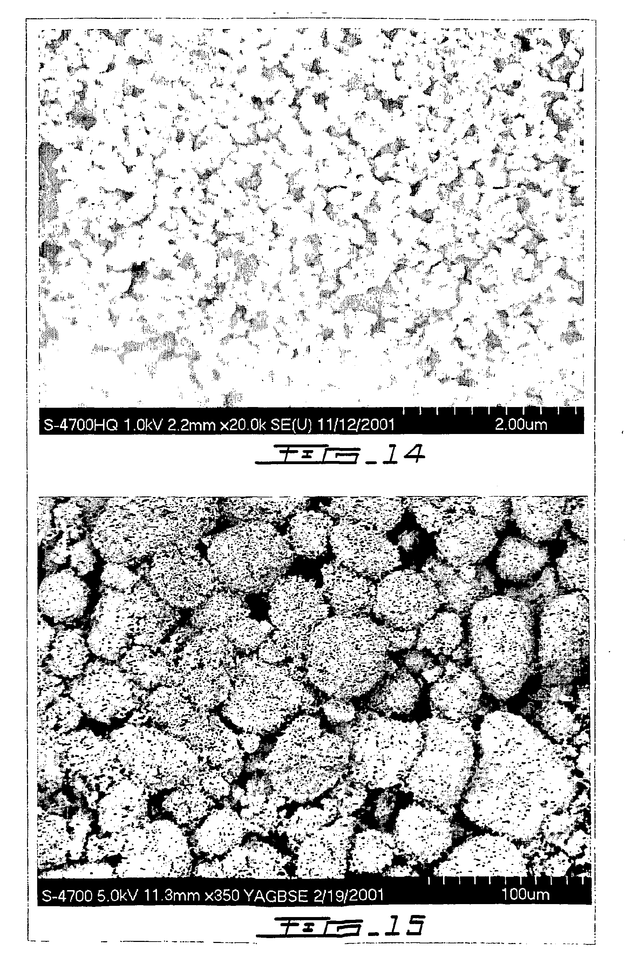

**La** **Figure 1****:** illustre les différentes applications des particules de Li₄Ti₅O₁₂ (enrobées ou non de carbone) comme anode ou comme cathode pour des batteries et pour des supercapaciteurs.
**La** **Figure 2****:** illustre les performances comparatives d'un procédé selon l'invention avec celles d'un procédé classique tel que décrit dans Prog. Batt. Solar Cells, 9 (1990), 209.
**La** **Figure 3****:** illustre le double rôle du carbone dans le processus de préparation de nouvelles particules et dans la constitution de la couche de carbone qui les enrobe.
**La** **Figure. 4****:** illustre un procédé de formation classique de Li₄Ti₅O₁₂ (particule macroscopique), en l'absence de carbone ; ce procédé permet d'obtenir une structure spinelle en présence d'impureté de type TiO₂ ou autre. Cette structure se limite, lors des performances électrochimiques, à des courants inférieurs à 2C.
**La** **Figure 5****:** illustre le même procédé illustré dans la Figure 4, à l'exception du réactif LiOH qui est substitué par le Li₂CO₃; ce type de procédé donne une formation d'agglomérats de type Li₄Ti₅O₁₂.
**La** **Figure 6****:** illustre un procédé selon l'invention de formation de nano particules de Li₄Ti₅O₁₂ à partir d'un mélange ternaire LiOH-C-TiO₂, intimement mélangé à haute énergie, ce mélange est chauffé à 400 °C puis à 600°C. Ce type de procédé donne lieu à une formation de nano agglomérats de Li₄Ti₅O₁₂.
**La** **Figure 7****:** illustre un procédé similaire à celui représenté dans de la Figure 6, à l'exception de le LiOH qui est substitué par du Li₂CO₃; ce type de procédé conduit à la formation de nano agglomérats de Li₄Ti₅O₁₂.
**La** **Figure 8****:** illustre un procédé similaire à celui illustré dans la Figure 7, en ajoutant au produit du départ du Li₂CO₃; ce type de procédé permet d'obtenir des nano agglomérats de Li₄Ti₅O₁₂.
**La** **Figure 9****:** illustre un procédé similaire à ceux représentés dans les Figures 6 et 7, à l'exception du fait que la calcination est réalisée sous atmosphère inerte; ce type de procédé permet d'obtenir des nano agglomérats de Li₄Ti₅O₁₂ enrobés du carbone. Cette structure donne des performances électrochimiques exceptionnelles à haut densité de courant (12C).
**La** **Figure 10****:** illustre les avantages d'un pré-traitement du mélange broyé à haute énergie. Procédé à sec. Précurseur homogène. Surface spécifique homogène. Enrobage de particule par le carbone. Contact direct de particule par le carbone. Contact direct via le carbone avec les particules réactives. Le carbone est un tr's bon conducteur thermique. Contamination faible. Dispersion homogène. Accélération ou synthèse rapide. Obtention d'un mélange de nanostructures après le traitement de température.
**La** **Figure 11****:** illustre le mécanisme et le rôle de l'enrobage de carbone, enrobage qui permet d'obtenir une grande diffusion du lithium dans le Li₄Ti₅O₁₂ et l'obtention de 90% de la capacité nominale à 12C.
**La** **Figure 12****:** illustre le mécanisme de la technologie des supercapaciteurs hybrides utilisant une anode de type nano-Li₄Ti₅O₁₂.
**La** **Figure 13****:** est la courbe de TGA d'un mélange TiO₂ + Li₂CO₃ + carbone, après un broyage à haute énergie, pendant 2 heures, sous air et sous argon; la réaction se déclenche à 400°C (sous argon et sous air).
**La** **Figure 14****:** est une photo MEB de particules microscopiques de Li₄Ti₅O₁₂ obtenues à partir d'un mélange Li₂CO₃ + TiO₂.
La Figure 15: est une photo MES de particules nanoscopiques de Li₄Ti₅0₁₂ obtenues à partir d'un mélange Li₂CO₃ + TiO₂ + carbone.
La Figure 16: illustre un procédé de fabrication de nano particules de Li₄Ti₅0₁₂ enrobées de carbone et obtenues par couchage de particules de TiO₂ par des formulations organiques de type polyol, et/ou de type PE-PO; le traitement thermique réalisé sous atmosphère inerte transforme la partie organique en carbone. Ce procédé se fait dans l'étape de mixte Jar milling par voie solvant ou à sec.
La Figure 17: illustre un procédé de fabrication de nanoparticules de Li₄Ti₅0₁₂ enrobées de carbone et obtenues par couchage des particules de TiO₂ par des formulations inorganique de type Al₂O₃, ZrO₂, le traitement thermique réalisé sous atmosphère inerte transformant la partie organique en carbone. Ce procédé se fait dans l'étape de mixte Jar milling par voie solvant ou à sec.
La Figure 18: illustre un procédé de fabrication de nano- Li₄Ti₅0₁₂ enrobées de carbone obtenues par couchage des particules de TiO₂ à l'aide d'une formulation hybride inorganique-organique.

La présente invention a pour objet un procédé selon la revendication 1, pour la synthèse de particules de formule Li₄Ti₅0₁₂ de formule Li_{(4-α)}Z_{α}Ti₅O₁₂ ou de formule Li₄Z_{β}Ti_{(5-β)}O₁₂ dans lesquelles α représente un nombre supérieur à zéro et inférieur ou égal à 0,33, β représente un nombre supérieur à 0 et inférieur ou égal à 0,5, Z représente une source d'au moins un métal choisi de préférence dans le groupe constitué par Mg, Nb, Al, Zr, Ni, Co. Ces particules sont enrobées d'une couche de carbone.

Selon un mode avantageux de réalisation, ce procédé de synthèse permet la préparation de particules de Li₄Ti₅0₁₂ (de préférence de structure spinelle) enrobées de carbone, lesdites particules comprenant de 0,01 à 10 %, de préférence de 1 à 6 %, plus préférentiellement encore d'environ 2 % en poids de carbone, la quantité de carbone étant exprimée par rapport à la masse totale des particules de Li₄Ti₅0₁₂;
ledit procédé comprenant les étapes de:
a} préparation d'une dispersion d'un mélange ternaire (de préférence d'un mélange ternaire intime) TiOₓ - Li_{z}Y carbone, dans lequel
   - x représentant un nombre se situant entre 1 et 2,
   - z représentant 1 ou 2, et
   - Y représentant un radical choisi parmi CO₃, OH, O, et TiO₃, ou un mélange de ces derniers; et
b) chauffage de la dispersion obtenue dans l'étape précédente,
   les conditions opérationnelles, plus particulièrement les conditions de concentration en composants du mélange ternaire soumis à dispersion, étant choisies de façon à donner une conversion, de préférence une conversion complète, des produits de départ en Li₄Ti₅O₁₂.

Selon un autre mode avantageux de réalisation, le procédé selon l'invention permet la synthèse de particules de Li_{(4-α)}Z_{α}Ti₅O₁₂ (de préférence de structure spinelle) enrobées de carbone, a représentant un nombre supérieur à zéro et inférieur ou égal à 0,33, Z représentant une source d'au moins un métal choisi de préférence dans le groupe constitué par Mg, Nb, Al, Zr, Ni, Co; lesdites particules contenant de 0,01 à 10 %, de préférence de 1 à 6 %, plus préférentiellement encore d'environ 2 % en poids de carbone, la quantité de carbone étant exprimée par rapport à la masse totale des particules de Li_{(4-α)}Z_{α}Ti₅O₁₂; ledit procédé comprenant les étapes de:
- a) préparation d'une dispersion d'un mélange ternaire intime TiOₓ - LiY - carbone dans lequel
   - x représentant un nombre se situant entre 1 et 2,
   - z représentant 1 ou 2, et
   - Y représentant un radical choisi parmi CO₃, OH, O, et TiO₃, ou un mélange de ces derniers; et
- b) chauffage de la dispersion obtenue dans l'étape précédente, de préférence à une température comprise entre 400 et 1.000 °C,
les conditions opérationnelles, plus spécifiquement les concentrations en composants du mélange ternaire soumis à dispersion, étant choisies de façon à permettre une conversion, de préférence une conversion complète, des produits de départ en Li_{(4-α})Z_{α}Ti₅O₁₂, et
la source d'au moins un métal Z étant ajoutée au mélange réactionnel de préférence dans l'étape a) dudit procédé à une teneur qui est de préférence de 0,1 à 2 % en poids, exprimée par rapport à la masse du dit mélange ternaire.

Les conditions opératoires qui permettent la préparation spécifique des particules de formule Li_{(4-α)}Z_{α}Ti₅O₁₂ sont plus particulièrement un contrôle des quantités initiales de chacun des composants présents dans le mélange ternaire servant à la préparation de la dispersion.

Selon un autre mode de réalisation, le procédé de l'invention permet la synthèse de particules de formule Li₄Z_{β}Ti_{(5-β)}O₁₂, (de préférence de structure spinelle), dans laquelle β est supérieur à 0 et inférieur ou égal à 0,5, enrobées de carbone, Z représentant une source d'au moins un métal choisi de préférence dans le groupe constitué par Mg, Nb, Al, Zr, Ni, Co, lesdites particules contenant de 0,01 à 10 %, de préférence de 1 à 6 %, plus préférentiellement encore d'environ 2 % en poids de carbone, la quantité de carbone étant exprimée par rapport à la masse totale des particules de formule Li₄Z_{β}Ti_{(5-β)}O₁₂,
ledit procédé comprenant les étapes de:
- a) préparation d'une dispersion d'un mélange ternaire intime TiOₓ- LiY - carbone dans lequel
   - x représentant un nombre se situant entre 1 et 2,
   - z représentant 1 ou 2, et
   - Y représentant un radical choisi parmi CO₃, OH, O, et TiO₃,
      ou un mélange de ces derniers; et
- b) chauffage de la dispersion obtenue dans l'étape précédente, de préférence à une température comprise entre 400 et 1.000 °C,
les conditions opérationnelles, plus spécifiquement les concentrations en composant du mélange ternaire soumis à dispersion, étant choisies de facon à obtenir une conversion, de préférence une conversion complète, des produits de départ en Li₄Z_{β}Ti_{(5-β)}O₁₂, et
la source d'au moins un métal Z étant ajoutée au mélange réactionnel de préférence dans l'étape a) dudit procédé à une teneur qui est de préférence de 0,1 à 2 % en poids exprimé par rapport à la masse du dit mélange ternaire,
les conditions opératoires qui permettent la préparation des particules de formule spécifique Li₄Z_{β}Ti_{(5-β)}O₁₂ sont plus particulièrement un contrôle des quantités initiales de chacun des constituants présents dans le mélange ternaire utilisé pour la préparation de la dispersion

Selon un mode avantageux de mise en oeuvre du procédé, on chauffe la dispersion du mélange ternaire jusqu'à une température d'environ 600°C.

Plus avantageusement encore, on chauffe la dispersion en deux étapes, la première étape s'effectuant jusqu'à ce que la dispersion atteigne une température d'environ 400°C, la seconde étape s'effectuant jusqu'à environ 600°C.

La première étape s'effectue de préférence par chauffage rapide jusqu'à environ 400°C, de préférence pendant une période de 1 à 4 heures.

La seconde étape s'effectue par chauffage lent, d'une durée qui est de préférence d'au moins quatre heures.

Selon un autre mode avantageux de réalisation du procédé, au moins une étape, qui est de préférence l'étape a), s'effectue sous air.

Selon un autre mode avantageux de réalisation du procédé, au moins une étape, qui est de préférence l'étape b), s'effectue au moins en partie sous atmosphère inerte.

La dispersion du mélange ternaire est avantageusement préparée à l'aide d'eau et/ou d'au moins un solvant qui est préférentiellement un solvant organique. Ce solvant organique est choisi de façon avantageuse dans le groupe constitué par les cétones, les hydrocarbures saturés, les hydrocarbures insaturés, les alcools et les mélanges de ces derniers, plus préférentiellement encore la dispersion du mélange ternaire est préparée à l'aide d'eau, d'acétone, d'heptane, de toluène ou à l'aide d'un mélange de ces derniers.

La dite dispersion est également préparée à sec sans solvant.

Selon un autre mode préférentiel on choisit un composé Li_{z}Y qui comprend au moins un composé choisi dans le groupe constitué par Li₂O, Li₂CO₃ et LiOH. Plus préférentiellement encore le composé Li_{z}Y comprend exclusivement du Li₂CO₃, ledit Li₂CO₃ étant de préférence présent à raison de 25 à 30 % en poids par rapport à la masse totale du mélange ternaire.

Avantageusement, la dispersion est réalisée par broyage mécanique, de préférence par broyage mécanique à haute énergie, de préférence à sec et/ou par Jar milling de préférence avec un solvant.

Selon un autre mode préférentiel on choisit un composé TiOₓ de type TiO₂ anatase ou rutile (de préférence de type TiO₂ anatase) ou un mélange des deux et le TiO₂ est de préférence présent dans ledit mélange ternaire à des concentrations de 58 à 71 % en poids.

Le composé Li_{z}Y comprend de préférence du Li₂TiO₃, ce Li₂TiO₃ étant préférentiellement présent à raison de 43 à 48 % en poids de Li₂TiO₃, par rapport à la masse totale du mélange ternaire.

Le carbone utilisé pour la réalisation du procédé selon l'invention peut prévenir de toute source. Avantageusement le carbone est choisi dans le groupe constitué par les graphites naturels ou artificiels, les noirs de carbone (de préférence les noirs d'acétylène), les noirs de Shawinigan, les noirs de Ketjen, et les cokes (de préférence les cokes de pétrole) est ajouté au milieu réactionnel, de préférence au début de la préparation de la dispersion du mélange ternaire.

Le carbone peut aussi être produit au cours dudit procédé, de préférence à partir d'au moins une matière organique libre, telle qu'un polymère, présent dans le milieu réactionnel.

Le carbone peut également être produit à la surface des particules par calcination d'une matière organique et/ou inorganique déposée, au cours dudit procédé, sur la surface des particules de Li₄Ti₅O₁₂ et/ou sur la surface des particules à base de Li₄Ti₅O₁₂ et/ou sur la surface d'au moins un des réactifs utilisés (de préférence le TiO₂) pour la préparation de la dispersion dudit mélange ternaire.

De façon préférentielle, le carbone utilisé est sous forme de particules ayant une surface spécifique supérieure ou égale à 2 m²/g, de préférence sous forme de particules ayant une surface spécifique supérieure ou égale à 50 m²/g.

Selon un mode avantageux de réalisation, le procédé de l'invention est conduit en présence d'une atmosphère contenant de l'oxygène, une partie du carbone présent dans le milieu réactionnel étant alors consommée durant ledit procédé.

Selon un autre mode avantageux de réalisation, l'enrobage de carbone est obtenu à partir de la présence, dans le milieu réactionnel, d'une poudre de carbone de Shawinigan et /ou d'au moins un polymère qui est de préférence un polyol ou un copolymère polyéthylène-polyoxyde d'éthylène.

Selon un autre mode avantageux de réalisation de l'invention, on utilise comme produit de départ du TiO₂ enrobé d'au moins une matière inorganique, d'une matière inorganique qui comprend de préférence un oxyde d'aluminium et/ou un oxyde de zirconium, plus préférentiellement encore d'au moins une matière organique qui comprend du Al₂O₃ et /ou du ZrO₂. Selon une autre variante, on utilise du TiO₂ enrobé de matière hybride inorganique-organique.

Les particules obtenues par le procédé de l'invention comportent un noyau enrobé de carbone, le noyau desdites particules étant:
- à base de Li₄Ti₅O₁₂; ou
- à base de Li_{(4-α)}ZαTi₅O₁₂ avec a supérieur à 0 et inférieur ou égal à 0,33, Z représentant une source d'au moins un métal choisi de préférence dans le groupe constitué par Mg, Nb, Al, Zr, Ni, Co; ou
- à base d'au moins un composé de formule Li₄Z_{β}Ti(5-β)O₁₂ avec β supérieur à 0 et/ou inférieur ou égal à 0,5, Z représentant une source d'au moins un métal choisi de préférence dans le groupe constitué par Mg, Nb, Al, Zr, Ni, Co.

Une sous-famille préférentielle est composée par les particules dans lesquelles le noyau comporte majoritairement, de préférence au moins 65 % de L₁₄Ti₅O₁₂ de Li_{(4-α)}Z_{α}Ti₅O₁₂ de Li₄Z_{β}Ti_{(5-β)}O₁₂ ou d'un mélange de ces derniers.

Le complément étant notamment constitué par TO₂, Li₂TO_{3,} ou des restes de solvants.

Plus avantageusement encore, le noyau desdites particules est exclusivement constitué de Li₄Ti₅O₁₂, de Li_{(4-α)}Z_{α}Ti₅O₁₂ de Li₄Z_{β}Ti_{(5-β)}O₁₂ ou d'un mélange de ces derniers.

Une sous-famille préférentielle des particules est constituée par les particules qui présentent une capacité réversible, mesurée selon la méthode définie dans la description, qui est comprise entre 155 et 170 mAh/g.

Selon un mode avantageux, ces particules sont constituées d'un noyau de Li₄Ti₅O₁₂ enrobé d'une couche de carbone.

Les particules ont de préférence des nanostructures. Leur taille, mesurée au microscope électronique à balayage, est de préférence comprise entre 10 et 950 nanomètres.

Les particules sont par ailleurs caractérisées par leur noyau qui a une taille, mesurée au microscope électronique à balayage, qui est de préférence comprise entre 10 et 500 nanomètres.

L'enrobage de carbone qui recouvre ces particules est caractérisé par une épaisseur qui est, mesurée elle aussi au microscope électronique à balayage, comprise entre 10 et 450 nanomètres, plus préférentiellement encore l'épaisseur de l'enrobage varie entre 20 et 300 nanomètres.

Une cathode de générateur électrochimique (de préférence de générateur électrochimique de type recyclable) peut comprendre des particules telles que susceptibles d'être obtenues par misé en oeuvre de l'un quelconque des procédés selon la présente invention.

Une anode de générateur électrochimique (de préférence de générateur électrochimique recyclable) peut comprendre des particules telles que susceptibles d'être obtenues par mise en oeuvre de l'un quelconque des procédés selon la présente invention.

Un générateur électrochimique (de préférence de type rechargeable) de type lithium peut comporter une anode de type lithium métallique et une cathode de type Li₄Ti₅O₁₂ et/ou de type Li_{(4-α)}Z_{α}Ti₅O₁₂ et/ou de type Li₄Z_{β}Ti_{(5-β)}O₁₂ ou de leurs mélanges, la cathode dans cette batterie étant telle que précédemment définie.

Un générateur électrochimique (de préférence de type rechargeable) de type Lithium ion peut comprendre une anode de type Li₄Ti₅O₁₂ et/ou de type Li_{(4-α)}Z_{α}Ti₅O₁₂ et/ou de type Li₄Z_{β}Ti_{(5-β})O₁₂ ou de leurs mélanges, et une cathode de type LiFePO₄, LiCoO₂, LiCoPO₄, LiMn₂O₄ et/ou LiNiO₂ ou de leurs mélanges, dans laquelle l'anode est telle que définie précédemment.

De préférence, un tel générateur utilise dans l'anode et/ou dans la cathode un collecteur de courant d'aluminium plein ou de type Exmet (expanded metal).

Une sous-famille préférentielle de générateurs électrochimiques selon la présente invention est constituée par les générateurs ne nécessitant aucune formation préalable de la batterie.

Un supercapaciteur de type hybride peut comprendre une anode de type Li₄Ti₅O₁₂ et/ou de type Li_{(4-α)}Z_{α}Ti₅O₁₂ et/ou Li₄Z_{β}Ti_{(5-β)}O₁₂ et une cathode de type graphite ou carbone à grande surface spécifique dans laquelle l'anode est telle que définie précédemment, ne demandant aucune formation préalable du supercapaciteur.

Selon un mode avantageux, l'anode et/ou la cathode d'un tel supercapaciteur est (sont) équipées d'un collecteur de courant d'aluminium plein ou de type Exmet (expanded metal).

Selon un mode préférentiel, l'électrolyte utilisé dans le générateur électrochimique ou dans le supercapaciteur est de nature polymère sec, gel, liquide ou céramique.

**L'invention est plus particulièrement réalisée selon un des modes opératoires ci-après explicités:**

### 1- En présence de la poudre de carbone

La présente invention met à disposition une nouvelle méthode de synthèse de L₁₄Ti₅O₁₂ simple, rapide et moins coûteuse. La synthèse est basée sur un mélange ternaire de TiO₂ de structure anatase ou rutile, de Li₂CO₃ et de carbone. Le mélange est bien dispersé puis soumis à une phase de chauffage qui comporte deux étapes. La première étape est le chauffage rapide à 400°C sous air. Ce pallier de température aide d'une part à éliminer les traces d'heptane lorsque ce solvant est utilisé et d'autre part stimule le dégagement de CO₂. La seconde étape à 600°C est plus longue et requiert un minimum de 4 heures. Ceci complète la transformation du mélange ternaire en Li₄Ti₅O₁₂ de structure spinelle. La finesse de la granulométrie est obtenue grâce à un temps de chauffage plus long lors de la seconde étape (voir l'illustration donnée dans la Figure 2).

Le carbone joue un rôle primordial dans la synthèse (voir à ce sujet la Figure 3). En premier lieu, le carbone s'oxyde avec l'oxygène de l'air, avec l'oxygène provenant du TiO₂ en dégageant du CO₂. En second lieu, le titane réagit avec le lithium en formant du titane lithié. Ce dernier s'oxyde avec l'air. La réaction de synthèse se schématise comme suit:

5 TiO₂+XC+2Li₂CO₃ → Li₄Ti_{5O12}+(X+2)CO₂ (2)

Un excès de carbone est utilisé afin d'assurer la transformation complète. En effet, le carbone brûle en présence d'air, puis son excès réduit le TiO₂ et le Li₂CO₃. On utilise dans cette invention des carbones qui contiennent des groupements oxygène à la surface. Ces derniers réagissent avec l'oxyde de lithium. Le mélange TiO₂-carbone-Li₂CO₃ peut se faire par deux méthodes: dans un solvant ou dans un mélange à sec dispersé mécaniquement. Une fois que la poudre homogène et intime est obtenue, le carbone va jouer le rôle essentiel établi suivant la réaction (2) en obtenant un produit de Li₄Ti₅O₁₂ sans impuretés.

L'utilisation du Li₂O au lieu du Li₂CO₃ fonctionne bien, cependant à la moindre trace d'humidité il y a formation de LiOH ce qui réduit le rendement de production de Li₄Ti₅O₁₂ et qui exige de maintenir la synthèse à 800 °C.

La synthèse a aussi été réalisée avec le mélange TiO₂-Li₂CO₃-carbone dispersé par broyage mécanique à haute énergie (BMHE). L'étape principale avant le passage au BMHE est de bien disperser le mélange ternaire afin d'obtenir un mélange homogène (Figure 10). Pour cela, on utilise d'abord un cobroyage d'une durée de 15 minutes à 2 heures, de plus ce cobrayage aide aussi à baisser la température de la synthèse. Cette méthode produit des particules à l'échelle nanostructure du Li₄Ti₅O₁₂ (Figures 6,7 et 8), comparée au procédé classique qui permet de réaliser la formation de particules macroscopiques (Figures 4 et 5) L'utilisation de ces particules nanostructurées facilite l'épandage des électrodes minces et augmente la diffusion du lithium dans la structure spinelle pour les applications de puissance. Les applications de Li₄Ti₅O₁₂ sont présentées dans la Figure 1. Dans le cas où Li₄Ti₅O₁₂ est une cathode, la batterie développe 1,5 Volts, grâce à la rechargeabilité de Li₄Ti₅O₁₂, ce système devient très intéressant pour le marché des batteries rechargeables, ainsi remplacer le grand marché des batteries primaires alcalines de 1,5 Volts.

Le Li₄Ti₅O₁₂ est une poudre blanche isolante, afin d'augmenter sa conductivité électronique, on le cobroie avec du carbone. Ce dernier enrobe les particules du Li₄Ti₅O₁₂ et donne une bonne conductivité à l'électrode lors de l'intercalation et la désintercalation du lithium et garde sa capacité (mAh/g) stable à des courants élevés (mA/g). En effet, le carbone joue un double rôle dans cette invention, d'une part il aide à synthétiser un produit final pur de type Li₄Ti₅O₁₂ en baissant la température de synthèse, et d'autre part, il augmente la conductivité électronique par cobroyage avec le Li₄Ti₅O₁₂ pour la fabrication des électrodes pour générateur électrochimique.

### 2 - En présence de coating organique à la surface des particules de TiO₂

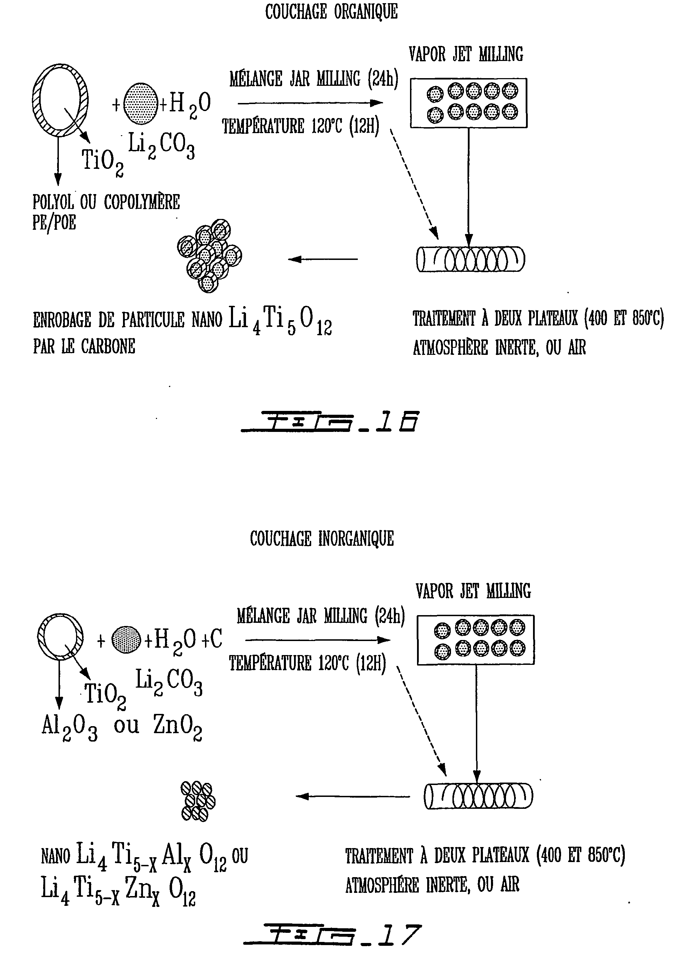

La synthèse du mélange du TiO₂ enrobé de matière organique (produit par la compagnie Kronos) avec Li₂ CO₃. Les deux composantes sont diluées dans l'eau. Le mélange intime est obtenu par Jar milling pendant 24 heures. La pâte obtenue est séchée à 120 °C pendant 12 heures. Le mélange est dispersé par «vapor jet milling de la compagnie Kronos ». Un traitement de température à deux plateaux 400 et 850°C sous atmosphère inerte, donne des particules nano-Li₄Ti₅O₁₂ enrobées de carbone (Figure 16).

### 3. En présence de matière organique libre dans le mélange

La synthèse du mélange du TiO₂ standard et de matière organique (polyol, PE-PO ou autre) avec Li₂CO₃ ou LiOH (ou leur mélange). Les trois composantes sont diluées dans l'eau. Le mélange intime est obtenu par Jar milling pendant 24 heures. La pâte obtenue est séchée à 120 °C pendant 12 heures. Le mélange est dispersé par « vapor jet milling de la compagnie Kronos ». Un traitement de température à deux plateaux 400 et 850°C sous atmosphère inerte, donne des nano-particules de Li₄Ti₅O₁₂ enrobées de carbone.

### 4. En présence de coating inorganique à la surface des particules de TIO₂

La synthèse du mélange du TiO₂ enrobé de matière inorganique de type Al₂O₃, ZrO₂ et autre (produit par la compagnie Kronos) avec Li₂CO₃ ou LiOH (ou leur mélange). Les deux composantes mélangées avec la matière organique sont diluées dans l'eau. Le mélange intime est obtenu par Jar milling pendant 24 heures. La pâte obtenue est séchée à 120 °C pendant 12 heures. Le mélange est dispersé par « vapor jet milling de la compagnie Kronos ». Un traitement de température à deux plateaux 400 et 850°C sous atmosphère inerte, donne des nano-particules de Li(_{4-α)}Z_{α}Ti₅O₁₂ ou de Li₄Z_{β}Ti(_{5-β)}O₁₂ enrobées de carbone (Figure 17).

### 5. En présence de coating hybride organique-inorganique à la surface des particules de TiO₂

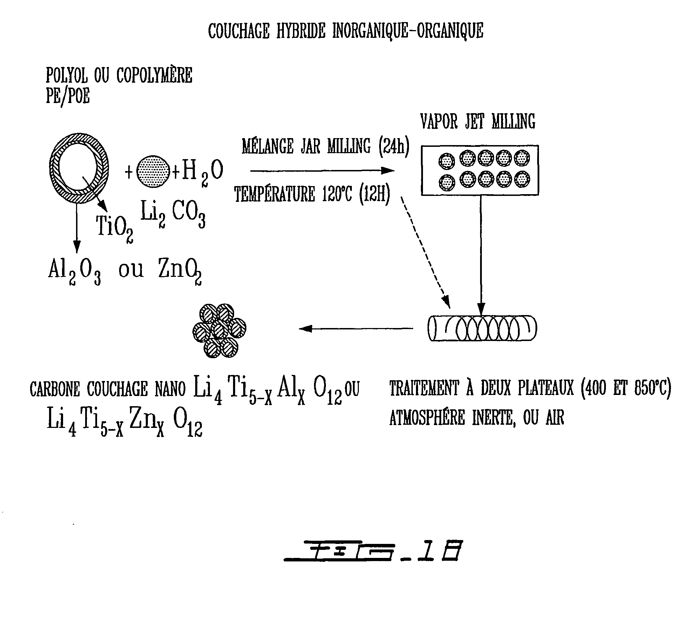

La synthèse du mélange de TiO₂ enrobé de matière hybride organique-inorganique de type polyol, de préférence un polyol de haute pureté, plus préférentiellement encore le triméthylpropane ou un copolymère de polyéthylène-polyoxyde d'éthylène, Al₂O₃, ZrO₂ et autre (produit par la compagnie Kronos) avec Li₂CO₃ ou LiOH (ou leur mélange). Les deux composantes sont diluées dans l'eau. Le mélange intime est obtenu par Jar milling pendant 24 heures. La pâte obtenue est séchée à 120 °C pendant 12 heures. Le mélange est dispersé par vapor jet milling de la compagnie Kronos. Un traitement de température à deux paliers de 400 et de 850°C sous atmosphère inerte, donne des nano particules Li_{(4-α)}Z_{α}Ti₅O₁₂ ou de Li₄Z_{β}Ti(5-β)O₁₂, enrobées de carbone (Figure 18).

### 6 - Utilisation du nano-Li₄Ti₅O₁₂ enrobé de carbone dans la technologie de supercapaciteur hybride (SCH) comme anode.

Cette technologie (Figure 12), utilise une anode à insertion de type Li₄Ti₅O₁₂ placée face à face avec une cathode de type graphite ou carbone à grande surface spécifique (double couche) avec un électrolyte polymère, gel, liquide ou céramique. L'avantage nano-Li₄Ti₅O₁₂ enrobé de carbone (Figure 11) facilite la diffusion du lithium à l'intérieur de la structure spinelle et en particulier à des courants élevés comme 12C (charge-décharge en 5 minutes). À ces régimes, la SCH développe 90 % de la capacité nominale. La présence du carbone donne une bonne conductivité au niveau du grain et à l'échelle de l'électrode, ce qui limite l'addition de grandes proportions de carbone à l'électrode. Ceci permet d'augmenter la densité d'énergie du SCH.

La technologie SCH utilise deux collecteurs de type Exmet (expanded metal) en aluminium avec un électrolyte ayant un mélange de sel LiTFSI + LiBF4 ou LiTFSI + LiPF₆ ou LiTFSI + BETI + LiBF₄. Ce mélange permet d'avoir une bonne conductivité ionique et réduit la corrosion de collecteur lors de la charge à haut voltage. La densité d'énergie de SCH est d'environ 60 Wh/kg et la capacité obtenue est de 90% à des taux de charge de 12C. La technologie SCH présente une densité d'énergie comparable aux technologies Pb-acide ou Ni-Cd; de plus cette technologie a une longue cyclabilité.

Rappelons que la technologie Li-Ion (graphite/LiCoO2) est limitée à des courants inférieurs à 2C (30 minutes) et par le nombre de cycles qui est de 1200.

### EXEMPLES

Les exemples suivants sont donnés à titre purement illustratif et ne sauraient être interprétés comme constituant une quelconque limitation de l'invention.

### Exemple 1- Préparation en présence d'heptane de particules de Li₄Ti₅0₁₂ enrobées de carbone

23 g de TiO₂ de structure anatase (commercialisé par la compagnie Kronoss, Varennes, Canada, sous l'appellation XP-406) sont mélangés avec 10 grammes de Li₂CO₃ (Aldrich, Canada) et avec 20 grammes de noir de Shawinigan. Un excès de noir de carbone est utilisé dans le but d'assurer la transformation complète du CO₂ et de diminuer la température de la synthèse.

Ce mélange ternaire est mis dans un contenant en acier et de l'heptane est ajouté dans un rapport poudre/liquide d'environ 35g/150ml. L'heptane sert à réduire la chaleur et la friction entre les particules de la poudre et les billes et laisse le produit inerte. Des billes en acier inox sont ajoutées pour homogénéiser le mélange ternaire. Après 2 heures de cobroyage intime une poudre à granulométrie fine est obtenue. Le succès du cobroyage dépend de l'abaissement de la température de la synthèse. Le chauffage de ce cobroyé se fait en deux étapes. La première étape est un chauffage rapide à 400 °C sous air. Ce palier de température facilite l'élimination des traces d'heptane et stimule le début de dégagement de CO₂. Cela a été prouvé par la perte de poids mise en évidence par TGA (Perkin thermal analysis) qui est rapportée dans la Figure 13. La seconde étape consiste à chauffer lentement jusqu'à 600 °C. Ceci complète la transformation du produit en Li₄Ti₅O₁₂ à structure spinelle. Le spectre des rayons-X démontre la présence des pics caractéristiques de la structure Li₄Ti₅O₁₂.

### Exemple 2 - Préparation à sec de particules de Li₄Ti₅0₁₂ enrobées de carbone

23g de TiO₂ de structure anatase (XP-406 de Kronoss, Varennes) sont mélangés avec 10 grammes de Li₂CO₃ (Aldrich, Canada) et avec 20g de noir de Shawinigan. À nouveau un excès de noir de carbone est utilisé afin d'assurer la transformation complète du CO₂ et pour diminuer la température de synthèse. Ce mélange ternaire est mis dans un contenant à sec avec des billes en acier inox.

Après un broyage intime pendant 2 heures, une poudre à fine granulométrie est obtenue. Le chauffage de ce cobroyage se fait en deux étapes à 400°C puis à 600 °C. Le spectre des rayons-X démontre la présence d'une structure spinelle pour les particules de Li₄Ti₅O₁₂ ainsi synthétisées.

### Exemple 3 - Préparation à sec et caractérisation de nano particules particules de Li₄Ti₅0₁₂ enrobées de carbone

23g de TiO₂ de structure anatase (XP-406 de la compagnie Kronoss, Varennes) sont mélangées avec 10 grammes de Li₂CO₃ (Aldrich, Canada) et avec 2 grammes de noir de Shawinigan. Un excès de noir de carbone de 6 grammes est à nouveau utilisé dans le but d'assurer une transformation complète du CO₂ et afin de diminuer la température de la synthèse. Ce mélange ternaire a subi un broyage mécanique à haute énergie (à l'aide d'une machine de type SPEX 8000, Shaker mill machine) en présence des billes en acier inox, dans un rapport bille:poudre de 10:1. La période du broyage qui peut varier entre 3 minutes et 3 heures et qui dans le cas du présent exemple de 2 heures. Le chauffage du cobroyé est fait en deux étapes. La première étape consiste en un chauffage rapide jusqu'à 400 °C sous air. La seconde étape consiste en un chauffage lentement jusqu'à 600 °C. Ceci complète la transformation du produit en Li₄Ti₅0₁₂ de structure spinelle Le spectre des rayons-X confirme la présence de pics caractéristiques de la structure spinelle du Li₄Ti₅O₁₂·

La Figure 15 qui est une photo obtenue à l'aide du microscope à balayage électronique démontre que les particules de Li₄Ti₅O₁₂ sont de taille nanoscopique. Alors que la Figure 14 relative à une photo obtenue de la même façon mais pour des particules préparées sans ajout de carbone établie que les particules correspondantes sont de taille macroscopique.

### Exemple 4 - Préparation et évaluation d'une électrode contenant des particules Li₄Ti₅0₁₂ enrobées de carbone

Selon le procédé de synthèse utilisé dans l'exemple 1, des particules de Li₄Ti₅0₁₂, du poly(vinylidene fluoride) (PVDF) et du noir de Ketjen, présents dans la proportion massique 87/10/3, sont mélangés. Ce mélange est appliqué sur une électrode exmet en aluminium, puis chauffé pendant 12 heures sous balayage d'azote. Ensuite, l'électrode ainsi préparée est chauffée pendant 2 heures sous vide.

L'électrode est alors assemblée dans une cellule électrochimique d'environ 4 cm² avec un séparateur de type cell-gard face au lithium métal. Le solvant est de type TESA (tétra éthyl sulfone amine)-carbonate d'éthylène avec sel de LiTFSI (trifluoromethanesulfonimide de lithium). Le cyclage est réalisé, à température ambiante, entre 1,2 et 2,5V. La capacité réversible obtenue est de 155 mAh/g avec un voltage moyen de 1,55 V.

### Exemple 5 - mise en évidence de l'importance d'une bonne homogénéisation du mélange ternaire

Selon le processus de synthèse décrit dans l'exemple 1 ci-dessus, le Li₄Ti₅0₁₂ et du noir de ketjen, dans la proportion volumique 40/3, sont cobroyés dans l'heptane en présence de billes en acier inoxydable. Le mélange est séché puis mélangé avec une solution polymère à base d'un polyéther commercialisé par la société Baker Hughes, U.S.A. sous le nom commercial UNITHOX 750, dans un rapport volumique 43/57. Ce mélange est alors appliqué sur collecteur en aluminium, puis chauffé pendant 12 heures sous balayage d'azote. Le collecteur ainsi traité est alors chauffé pendant 2 heures sous vide.

L'électrode est assemblée dans une cellule électrochimique d'environ 4 cm² de surface avec un séparateur de type polymère à base d'un polyéther salé, préparé au laboratoire, avec le sel de LiTFSI (tétra fluoro sulfure imide de lithium) placé face à face avec le lithium métal comme anode. Le cyclage est réalisé à 80°C, entre 1,2 et 2,5V. La capacité réversible obtenue est de 155 mAh/g en C/24 et elle est de 96% de la capacité nominale obtenue à un régime rapide en C/1. La pile ainsi préparée démontre une bonne stabilité en cyclage, plus de 1500 cycles en C/1.

L'utilisation du cobroyage et la réalisation d'une bonne dispersion intime entre l'oxyde Li₄Ti₅0₁₂ et le noir de carbone assurent la reproductibilité des résultats.

En revanche, si l'oxyde Li₄Ti₅0₁₂ est mélangé sans cobroyage avec le noir de carbone et le polymère, dans la proportion volumique 40/3/57 et si ce mélange est appliqué sur collecteur en aluminium, puis chauffé pendant 12 heures sous balayage d'azote, et ensuite, chauffé pendant 2 heures sous vide, alors le résultat électrochimique obtenu par introduction de cette électrode dans une pile sans solvant (tout solide) comprenant un polymère (polyether) à 80°C est de 150 mAh/g en C/24, alors qu'on ne trouve que 75% de la valeur nominale avec un régime rapide en C/1. En fait, ceci est dû à la mauvaise dispersion entre l'oxyde et le noire de carbone. De plus, la reproductibilité des résultats est incertaine.

### Exemple 6 - Préparation de Li₄Ti₅O₁₂ à partir d'un mélange binaire LiOH-TiO₂

Dans cet exemple, des particules de Li₄Ti₅0₁₂ ont été préparées à partir d'un mélange binaire de LiOH-TiO₂ (anatase) de 10,5g et 16g respectivement, chauffé pendant 18 heures sous air. Le spectre des rayons-X obtenu pour ces particules établit la présence de pics caractéristiques de la structure spinelle du Li₄Ti₅0₁₂ ainsi que la présence de traces de TiO₂ (rutile) et Li₂TiO₃.

La poudre de Li₄Ti₅O₁₂ obtenue est mélangée avec PVDF et avec du noir de Shawinigan dans la proportion massique 87/10/3. Ce mélange qui constitue l'électrode est appliqué sur une support Exmet en aluminium, puis chauffée pendant 12 heures sous balayage d'azote. L'électrode ainsi obtenue étant alors chauffée pendant 2 heures sous vide. La dite électrode est assemblée dans une cellule électrochimique d'environ 4 cm² avec un séparateur de type Celgard placé face à face avec le lithium métal comme anode. Le solvant utilisé est de type TESA (tétra-éthylsulfamid) - carbonate d'éthylène (1:1 en volume) avec 1 molaire de LiTFSI (bis (trifluorométhane sulfonimide)).

La capacité réversible obtenue dans ce cas est de 140 mAh/g. La capacité obtenue par la synthèse de type binaire est donc sensiblement inférieure à celle obtenue par la synthèse ternaire en présence du carbone.

### Exemple 7 - Préparation de particules Li₄Ti₅0₁₂ enrobées de carbone avec du PVDF et du noir de Shawinigan

Selon la synthèse de l'exemple 1, des particules de Li₄Ti₅0₁₂ sont mélangées avec du PVDF et du noir de Shawinigan dans la proportion massique 87/10/3. Ce mélange est appliqué sur une électrode de type Exmet d'aluminium, puis chauffé pendant 12 heures sous balayage d'azote. Le tout est ensuite chauffé pendant 2 heures sous vide.

De l'oxyde de cobalt LiCoO₂ est mélangé avec PVDF et du noir de Shawinigan dans la proportion massique 87/10/3. Puis le mélange ainsi obtenu est appliqué sur une électrode de type Exmet en aluminium, l'ensemble ainsi obtenu est alors chauffé pendant 12 heures sous balayage d'azote, puis dans une deuxième étape chauffé pendant 2 heures sous vide.

L'électrode de Li₄Ti₅O₁₂ est assemblée dans une batterie lithium-ion face à face à l'électrode de LiCoO₂ comme cathode avec un séparateur de type Celgard. Le solvant utilisé est de type carbonate d'éthylène - carbonate de méthyle d'éthylène (1 : 1 en volume) avec 1 molaire de bis (trifluorométhane sulfonimide) de lithium.

Le voltage de la batterie tend vers zéro volt (33 mV). La batterie est cyclée entre 1,2 V et 2,8 V. Le voltage moyen est autour de 2,5 V. La capacité irréversible du premier cycle est d'environ 2%. Cette irréversibilité est minimum comparée au système conventionnel carbone/LiCoO₂. Du fait que les deux électrodes du système Li₄Ti₅0,₂/LiCoO₂ sont sans film de passivation, la capacité réversible de la batterie est stable pendant plus de 500 cycles. Sachant que 2,5 V donne 70% du voltage moyen du système lithium-ion de type carbone/LiCoO₂, un déficit de 30 % reste à rattraper. Le manque énergétique à gagner du système carbone/LiCoO₂ peut être comblé par:
- un collecteur de type Exmet à base d'aluminium à l'anode qui permet de réduire le poids de la batterie (système conventionnel carbone/LiCoO₂ utilisant le cuivre comme collecteur de courant de l'anode);
- la diminution de la quantité de LiCoO₂ (absence d'irréversibilité) alors que dans le système classique, l'anode de type carbone consomme une capacité irréversible d'environ 20%, pour former le film de passivation;
- l'augmentation de l'énergie du système Li₄Ti₅O₁₂ en utilisant du phosphate olivine de type LiCoPO₄ à haut voltage ou lithium manganèse à haut voltage dans la cathode;
- l'utilisation d'un séparateur mince de 10 à 15 microns; et
- l'emballage simplifié mince de type métal plastique.

### Exemple 8 - Préparation d'une cellule électrochimique utilisant un solvant de type TESA

Selon le mode opératoire utilisé dans l'exemple 1, le Li₄Ti₅0₁₂ est mélangé avec du PVDF et avec du noir de Shawinigan dans la proportion massique 87/10/3. Ce mélange est appliqué sur une électrode de type Exmet en aluminium.

L'ensemble ainsi obtenu est chauffé pendant 12 heures sous balayage d'azote, puis pendant 2 heures.

Le graphite naturel NG7 (Kansai Coke, Japon) est mélangé avec du PVDF dans la proportion massique de 90/10. Ce mélange est appliqué sur une électrode de type Exmet en aluminium. L'ensemble ainsi obtenu est chauffé pendant 12 heures sous balayage d'azote puis chauffé pendant 2 heures sous vide.

L'électrode de Li₄Ti₅0₁₂ est montée face à face avec l'électrode de graphite séparée par un Celgard. Le solvant utilisé est le PC + EC + TESA (1 : 1: 1 en volume) contenant 1 molaire de LiPF₆ + LiTFSI.

Dans cet exemple l'électrode de graphite est utilisée comme cathode et la réaction d'intercalation est une réaction électrolytique de la double couche dont l'anion PF₆ est absorbé à la surface du graphite. Les limites de voltage de cyclage sont comprises entre 1,5 V et 3,0 V, pour un potentiel moyen de 2,25 V. Cette valeur de voltage moyen augmente la densité d'énergie de 50% comparativement aux valeurs obtenues pour un système conventionnel carbone-carbone.

L'efficacité du premier cycle est de 96%. Après 200 cycles, aucune perte de capacité n'a été observée.

### Exemple 9 - Préparation de particules de Li₄Ti₅O₁₂ enrobées de carbone utilisant un polyol comme source de crabone

87g de particules de TiO₂ de structure anatase enrobées avec le polyol (de type XP-413 de la compagnie Kronos de Varennes) sont mélangés avec 35,4g de Li₂CO₃ (Limetech, Canada). Le mélange des deux composés se fait en présence d'eau dans un Jar milling. Les proportions mélange-billes en zircon-vide sont de 1/3-1/3-1/3. Le temps de broyage est de 24h. La pâte obtenue est séchée à 120°C pendant 12 heures. La calcination de la poudre obtenue est effectuée dans un four rotatif (de fabrication interne) sur deux paliers de températures. Le premier palier est à 400°C pendant une heure et le second palier à 850°C pendant 3 heures sous une atmosphère contrôlée d'azote. L'analyse par diffraction des rayons X de la poudre synthétisée montre bien l'obtention de nano (mise en évidence par MEB) particules de Li₄Ti₅O₁₂ de structure spinelle. L'analyse du taux de carbone réalisée par la méthode carbon sulfur Detector (modèle CS444, Leco, USA), montre bien qu'il en reste une quantité de 2% en poids dans la structure de Li₄Ti₅O₁₂.

### Exemple 10 - Préparation de particules de Li₄Ti₅O₁₂ utilisant du polyéthylène glycol comme source de carbone

87 grammes de TiO₂ de structure anatase (XP-406 de la compagnie Kronos, Varennes) sont mélangés avec 35,4g de Li₂CO₃ (Limetech, Canada) et avec 8 grammes de PE-PO. Les trois composés sont mélangés en présence d'eau dans un Jar milling. Les proportions mélange-billes en zircon-volume libre sont de 1/3-1/3-1/3. Le temps de broyage est de 24 heures. La pâte obtenue est séchée à 120°C pendant 12 heures. La calcination de la poudre obtenue est effectuée dans un four rotatif (de fabrication interne) sur deux plateaux de températures. Le premier est à 400°C pendant une heure et le second à 850°C pendant 3 heures sous une atmosphère contrôlée d'azote. L'analyse par diffraction des rayons X de la poudre synthétisée montre bien l'obtention d'une structure spinelle avec des nano particules de Li₄Ti₅O₁₂, la taille des particules est mise en évidence par MEB. L'analyse du taux de carbone obtenu est réalisée par la méthode carbon sulfur Detector (modèle CS444, Leco, USA). Elle montre bien que 2% en poids de carbone restent présents dans la structure de Li₄Ti₅O₁₂.

### Exemple 11 - préparation de particules de Li₄Ti₅O₁₂ enrobées de carbone par calcination et à partir de particules de TiO₂ enrobées

87 grammes de particules deTiO₂ de structure anatase enrobées de Al₂O₃ (de type XP-414 de la compagnie Kronos, Varennes) sont mélangées avec 35,4 grammes de Li₂CO₃ (Limetech, Canada) et avec 7 grammes de noir de Shawinigan. Les trois composés sont mélangés en présence d'eau dans un Jar milling. Les proportions mélange-billes en zircon-vide sont de 1/3-1/3-1/3. Le temps de broyage est de 24 heures. La pâte obtenue est séchée à 120°C pendant 12 heures. La calcination de la poudre obtenue est réalisée dans un four rotatif (de fabrication interne) en deux paliers. Le premier pallier est de 400°C pendant une heure et le second palier est à 850°C pendant 3 heures sous une atmosphère contrôlée d'azote. L'analyse par diffraction des rayons X de la poudre synthétisée montre bien l'obtention de la structure spinelle avec des nano particules de Li₄Ti₅O₁₂, la taille des particules étant mesurée par MEB. L'analyse du taux de carbone, réalisée par la méthode carbon sulfur Detector (modèle CS444, Leco, USA), montre bien que 1,95% en poids de carbone est présent dans la structure de Li₄Ti₅O₁₂.

### Exemple 12 - Préparation de particules de Li₄Ti₅O₁₂ à partir de particules de TiO₂ enrobées mélange AL₂O₃-polyols

87 grammes de particules de TiO₂ de structure anatase enrobées d'un mélange Al₂O₃-Polyols (de type XP-415 de la compagnie Kronos, Varennes) sont mélangés avec 35,4 grammes de Li₂CO₃ (Limetech, Canada) et avec 7 grammes de noir de Shawinigan. Les trois composés sont mélangés en présence d'eau dans un Jar milling. Les proportions mélange-billes en zircon volume libre sont de 1/3-1/3-1/3. Le temps de broyage est de 24 heures. La pâte obtenue est séchée à 120°C pendant 12 heures. La calcination de la poudre obtenue est effectuée dans un four rotatif (de fabrication interne) par deux paliers de températures. Le premier palier est à 400°C pendant une heure et le second palier est à 850°C pendant 3 heures sous une atmosphère contrôlée d'azote. L'analyse par diffraction des rayons X de la poudre synthétisée montre bien l'obtention d'une structure spinelle avec des nano particules de Li₄Ti₅O₁₂, la taille des particules est mesurée par MEB. L'analyse du taux de carbone, réalisée par la méthode carbon sulfur Detector (modèle CS444, Leco, USA), montre bien qu'il en reste 1,95% en poids dans la poudre de Li₄Ti₅O₁₂.

### Exemple 13 - Préparation d'une batterie avec des particules de Li₄Ti₅O₁₂ enrobées de carbone et avec EC + PC + DMC comme solvant

Selon le mode opératoire de l'exemple 1, du Li₄Ti₅O₁₂ est mélangé avec du PVDF et avec du noir de Shawinigan dans la proportion massique 87/10/3. Ce mélange est appliqué sur une électrode Exmet en aluminium. Le tout chauffé pendant 12 heures sous balayage d'azote, puis pendant 2 heures sous vide.

Le carbone à grande surface (PICA, FRANCE) est mélangé avec du PVDF dans une proportion massique de 20/80. Ce mélange est appliqué sur une électrode de type Exmet en aluminium. Le tout chauffé pendant 12 heures sous balayage d'azote puis chauffé pendant 2 heures sous vide.

L'électrode de Li₄Ti₅O₁₂ est montée face à face avec une électrode du carbone comme cathode séparée par un Celgard. Le solvant utilisé est le EC + PC + DMC (1:1:1 en volume) contenant 1 molaire de LiTFSI+LiBF₄.

Dans cet exemple, l'électrode du carbone est utilisée comme cathode. La réaction d'intercalation dans ce cas est une réaction électrolytique de double couche dont les anions PF₆ et TFSI sont absorbés à la surface du carbone. Les limites de voltage de cyclage sont entre 1,5 V et 3,0 V, avec un potentiel moyen de 2,25 V. Cette valeur de voltage moyen augmente la densité d'énergie de 50% comparativement au système conventionnel carbone-carbone.

L'efficacité du premier cycle est de 96%. Après 200 cycles aucune perte de capacité n'a été observée.

### Exemple 14 - Préparation d'une batterie à partir de particules de Li₄Ti₅O₁₂ enrobées de carbone

Selon le mode opératoire de l'exemple 1, du Li₄Ti₅O₁₂ est mélangé avec du PVDF et avec du noir de Shawinigan dans la proportion massique 87/10/3. Ce mélange est appliqué sur une électrode de type Exmet en aluminium. Le tout chauffé pendant 12 heures sous balayage d'azote à une température de 120°C, puis 2 heures sous vide, à une température de 120°C.

Un polymère conducteur de type polyaniline est mélangé avec du PVDF et avec du noir de Shawinigan dans la proportion massique 87/10/3. Le mélange ainsi obtenu est appliqué sur une électrode Exmet en aluminium puis chauffé pendant 12 heures sous balayage d'azote, à une température de 120°C, puis chauffé pendant 2 heures sous vide, à une température de 120°C.

L'électrode de Li₄Ti₅O₁₂ est montée face à face avec l'électrode de carbone comme cathode séparée par un Celgard. Le solvant utilisé est le EC + PC + DMC ( 1: 1 :1 en volume), communément appelé, contenant 1 molaire de LiTFSI+LiBF₄.

Dans cet exemple, l'électrode polymère conducteur est utilisée comme cathode. La réaction d'intercalation est alors une réaction de dopage des anions PF₆ et TFSI à travers les chaînes du polymère conducteur. Les limites de voltage de cyclage sont comprises entre 1,5 V et 3,0 V avec un potentiel moyen de 2,25 V. Les performances observées sont comparables à celles obtenues dans l'exemple précédent.

En conclusion, les particules selon la présente invention présentent de façon surprenante une remarquable capacité à l'épandage, une excellente capacité nominale, une excellente stabilité au cyclage, et une puissance à haut courant remarquable des dispositifs électrochimiques qui les incorporent notamment au niveau des électrodes, ainsi qu'une flexibilité au niveau de l'épaisseur des électrodes que l'on peut préparer à partir de ces particules.

Ainsi à 12 C (5 minutes) les particules sous forment nano donnent 90 % de la capacité nominale, alors que les macrosparticules correspondantes ne développent que 50 % de la capacité. Les macros ont par ailleurs une limitation à des courants inférieurs à 5 C. Les nano particules n'ont pas de limitation.

Par ailleurs, si le prétraitement du mélange initial n'est pas optimisé, par exemple, si le temps de broyage est inférieur à 15 minutes, la synthèse du mélange en présence de carbone donne naissance à des particules macroscopiques.

De plus, la diffusion du lithium est plus rapide dans le cas des nano-particules.

## Revendications

1. Procédé de synthèse, en présence d'oxygène, de particules d'oxyde, ledit oxyde étant Li₄Ti₅O₁₂, Li_{(4-α)}Z_{α}Ti₅O₁₂ ou Li₄Z_{β}Ti_{(5-β)}O₁₂, 0<α≤0,33, 0<β<0,5, Z représentant une source d'au moins un métal choisi de préférence dans le groupe constitué par Mg, Nb, Al, Zr, Ni, et Co, ledit procédé comprenant les étapes de:
a) préparation d'une dispersion d'un mélange ternaire intime TiOₓ-Li_{z}Y-carbone, dans lequel
- x représente un nombre se situant entre 1 et 2,
- z représente 1 ou 2, et
- Y représente un radical choisi parmi CO₃, OH, O, et TiO₃, ou un mélange de ces derniers; et
b) chauffage de la dispersion obtenue dans l'étape précédente, à une température entre 400 et 1000°C,
les conditions opérationnelles, plus particulièrement les conditions de concentration en composants du mélange ternaire soumis à dispersion, étant choisies de façon à donner une conversion, de préférence une conversion complète, des produits de départ en Li₄Ti₅O₁₂, Li_{(4-α)}Z_{α}Ti₅O₁₂ ou Li₄Z_{β}Ti_{(5-β)}O₁₂, la source d'au moins un métal Z étant ajoutée au mélange réactionnel de préférence dans l'étape a) dudit procédé à une teneur qui est de préférence de 0,1 à 2% en poids, exprimée par rapport à la masse du dit mélange ternaire.

2. Procédé selon la revendication 1, dans lequel l'on chauffe la dispersion du mélange ternaire jusqu'à une température d'environ 600°C.

3. Procédé selon la revendication 2, dans lequel l'on chauffe la dispersion en deux étapes, la première étape s'effectuant jusqu'à ce que la dispersion atteigne une température d'environ 400°C, la seconde étape s'effectuant jusqu'à environ 600°C.

4. Procédé selon la revendication 3, dans lequel la première étape s'effectue par chauffage rapide jusqu'à environ 400°C, de préférence pendant une période de 1 à 4 heures.

5. Procédé selon la revendication 3 ou 4, dans lequel que la seconde étape s'effectue par chauffage lent, d'une durée qui est de préférence d'au moins quatre heures.

6. Procédé selon l'une quelconque des revendications 1 à 5, dans lequel la dispersion du mélange ternaire est préparée à l' aide d'eau et/ou d'au moins un solvant qui est préférentiellement un solvant organique, ledit solvant organique étant choisi de façon avantageuse dans le groupe constitué par les cétones, les hydrocarbures saturés, les hydrocarbures insaturés, les alcools et les mélanges de ces derniers, plus préférentiellement encore la dispersion du mélange ternaire est préparée à l'aide d'eau, d'acétone, d'heptane, de toluène ou à l'aide d'un mélange de ces derniers.

7. Procédé selon l'une quelconque des revendications 1 à 6, **caractérisé en ce que** la dite dispersion est préparée à sec sans solvant.

8. Procédé selon l'une quelconque des revendications 1 à 7, **caractérisé en ce que** le composé Li_{z}Y comprend au moins un composé choisi dans le groupe constitué par Li₂O, Li₂CO₃ et LiOH.

9. Procédé selon la revendication 8, **caractérisé en ce que** le composé Li_{z}Y comprend exclusivement du Li₂CO₃, ledit Li₂CO₃ étant de préférence présent à raison de 25 à 30% en poids par rapport à la masse totale du mélange ternaire.

10. Procédé selon l'une quelconque des revendications 1 à 9, dans lequel la dispersion est obtenue par broyage mécanique, de préférence par broyage mécanique à haute énergie, de préférence à sec et par Jar milling de préférence avec un solvant.

11. procédé selon l'une quelconque des revendications 1 à 8, **caractérisé en ce que** TiOₓ est de type TiO₂ anatase ou rutile ou un mélange des deux et que le TiO₂ est de préférence présent dans ledit mélange ternaire à des concentrations de 58 à 71 % en poids.

12. Procédé selon la revendication 11, **caractérisé enn ce que** TiOₓ est de type TiO₂ anatase.

13. Procédé selon la revendication 1, **caractérisé en ce que** le composé Li_{z}Y comprend du Li₂TiO₃, ce Li₂TiO₃ étant présent de préférence à raison de 43 à 48 % en poids par rapport à la masse totale du mélange ternaire.

14. Procédé selon la revendication 1, dans lequel le carbone du mélange ternaire est :
- choisi dans le groupe constitué par les graphites naturels ou artificiels, les noirs de carbone, les noirs de Shawinigan, les noirs de Ketjen, et les cokes, est ajouté au milieu réactionnel, de préférence au début de la préparation de la dispersion du mélange ternaire;
- produit au cours dudit procédé, de préférence à partir d'au moins une matière organique libre, telle qu'un polymère, présent dans le milieu réactionnel; ou
- produit à la surface des particules par calcination d'une matière organique et/ou inorganique déposée, au cours dudit procédé, sur la surface des particules de Li₄Ti₅O₁₂ et/ou sur la surface des particules à base de Li₄Ti₅O₁₂ et/ou sur la surface d'au moins un des réactifs utilisés pour la préparation de la dispersion dudit mélange ternaire.

15. Procédé selon la revendication 14, **caractérisé en ce que** le noir de carbone est un noir d'acétylène, et le coke est un coke de pétrole.

16. Procédé selon la revendication 15, **caractérisé en ce que** le carbone est produit à la surface du réactif TiO₂.

17. Procédé selon l'une quelconque des revendications 1 à 16, dans lequel le carbone est sous forme de particules ayant une surface spécifique supérieure ou égale à 2 m²/g, de préférence sous forme de particules ayant une surface spécifique supérieure ou égale à 50 m²/g.

18. Procédé selon la revendication 11, dans lequel le TiO₂ utilisé comme produit de départ est enrobé d'au moins une matière inorganique, de préférence d'une matière inorganique qui comprend de préférence un oxyde d'aluminium et/ou un oxyde de zirconium, plus préférentiellement encore qui comprend du Al₂O₃ et/ou du ZrO₂.

19. Procédé selon la revendication 11, dans lequel le TiO₂ utilisé est enrobé de matière hybride inorganique-organique.

20. Procédé selon l'une quelconque des revendications 1 à 17, dans lequel la taille des particules du mélange ternaire est comprise entre 100 nanomètres et 10 micromètres, de préférence elle est inférieure à 1 micromètre, plus préférentiellement encore entre 200 et 300 nanomètres.

## Claims

1. A process for synthesizing particles of an oxyde in the presence of oxygen,
wherein said oxyde is Li₄Ti₅O₁₂, Li_{(4-α)}Z_{α}Ti₅O₁₂ or Li₄ZβTi_{5-β}O₁₂, 0<α≤0.33, 0<β ≤0.5, Z is a source of at least one metal selected preferably from from the group consisting of Mg, Nb, Al, Zr, Ni and Co, said process comprising the steps of:
a) preparing a dispersion of a ternary mixture of TiOₓ-Li_{z}Y-carbon, wherein
x is a number between 1 and 2,
z is 1 or 2, and
Y is a radical selected from the group consisting of CO₃, OH, O, TiO₃ and mixtures thereof; and
b) heating the dispersion obtained in the prior step, at a temperature between 400 and 1000°C,
wherein the operating conditions, in particular the concentration of the components of the ternary mixture submitted to dispersion, are chosen in such a way as to yield a conversion, preferably a complete conversion, of the initial products into Li₄Ti₅O₁₂, Li_{(4-α)}Z_{α}Ti₅O₁₂ or Li₄Z_{β}Ti_{5-β}O₁₂, the source of at least one metal Z being added to the reaction mixture preferably in step a) at a concentration preferably of 0.1 to 2% expressed with respect to the weight of said ternary mixture.

2. The process according to claim 1, wherein the dispersion of the ternary mixture is heated at a temperature of about 600°C.

3. The process of claim 2, wherein the dispersion is heated in two steps, the first step being carried out until the dispersion reaches a temperature of about 400°C and the second step being carried up to about 600°C.

4. The process of claim 3, wherein the first step is carried out by rapid heating to around 400°C, preferably over a period of 1 to 4 hours.

5. The process of claims 3 or 4, wherein the second step is carried out by slow heating, with a duration that is preferably at least 4 hours.

6. The process according to any of claims 1 to 5, wherein dispersion of the ternary mixture is prepared using water and/or at least one solvent that is preferably an organic solvent, said organic solvent being advantageously chosen from the group consisting of ketones, saturated hydrocarbons, unsaturated hydrocarbons, alcohols and mixtures thereof, still more preferably, the dispersion of the ternary mixture is prepared using water, acetone, heptene, toluene or a mixture thereof.

7. The process any of claims 1 to 6, wherein the dispersion is carried out dry, without solvent.

8. The process any of claims 1 to 7, wherein the Li_{z}Y compound comprises at least one compound selected from the group consisting of Li₂O, Li₂CO₃ and LiOH.

9. The process of claim 8, wherein the Li_{z}Y compound comprises exclusively Li₂CO₃, said Li₂CO₃ preferably being present in a ratio of 25 to 30 % by weight with respect to the total weight of the ternary mixture.

10. The process according to any of claims 1 to 9, wherein the dispersion is carried out by mechanical milling, preferably by high energy mechanical milling, preferably dry and/or by Jar milling, preferably with a solvent.

11. The process according to any of claims 1 to 8, wherein TiOₓ is a TiO₂ of the anatase or rutile type (preferably the anatase TiO₂), or a mixture of both, and the TiO₂ is preferably present in said ternary mixture in concentrations of 58 to 71 % by weight.

12. The process of claim 11, wherein TiOₓ is TiO₂ anatase.

13. The process of claim 1, wherein the compound Li_{z}Y comprises Li₂TiO₃, said Li₂TiO₃ preferably being present in an amount of 43 to 48 % by weight with respect to the total weight of the ternary mixture.

14. The process according to claim 1, wherein the carbon is:
- selected from the group consisting of natural or artificial graphite, carbon black, Shawinigan black, Ketjen black and cokes and is added to the reaction mixture, preferably at the beginning of the preparation of the dispersion of the ternary mixture;
- produced in the course of said process, preferably from at least one free organic material, such as a polymer, present in the reaction mixture; or
- produced at the surface of the particles by calcination of an organic and/or inorganic material deposited, in the course of said process, on the surface of the Li₄Ti₅O₁₂ and/or on the surface of the particles based on Li₄Ti₅O₁₂ and/or on the surface of at least one reagent used for the preparation of the dispersion of said ternary mixture.

15. The process according to claim 14, wherein said carbon black is acetylene black, and coke is petrol coke.

16. The process according to claim 15, wherein the carbon is produced at the surface of TiO₂.

17. The process according to any of claims 1 to 16, wherein the carbon is in the form of particles having a specific surface area greater than or equal to 2 m²/g, preferably in the form of particles having a specific surface area greater than or equal to 50 m²/g.

18. The process according to claim 11, wherein the TiO₂ used as an initial product is coated with at least one inorganic material, preferably an inorganic material that preferably comprises an aluminium oxide and/or a zirconium oxide, and still more preferably that comprises Al₂O₃ and/or ZrO₂.

19. The process of claim 11, wherein the TiO₂ used is coated with a hybrid inorganic-organic material.

20. The process according to any of claims 1 to 17, wherein the size of particles in the ternary mixture is between 100 nanometers and 10 micrometers, preferably it is less than 1 micrometre, still more preferably between 200 and 300 nanometers.

## Patentansprüche

1. Verfahren zur Herstellung von Oxidteilchen in Gegenwart von Sauerstoff, wobei die Oxidteilchen Li₄Ti₅O₁₂, Li_{(4-α)}Z_{α}Ti₅O₁₂ oder Li₄ZβTi_{(5-β)}O₁₂ sind, wobei gilt: 0 < α≤ 0,33 und 0 < β≤ 0,5; und wobei Z für eine Quelle zumindest eines Metalls steht, das vorzugsweise aus der aus Mg, Nb, Al, Zr, Ni und Co bestehenden Gruppe ausgewählt ist, wobei das Verfahren folgende Schritte umfasst:
a) das Herstellen einer Dispersion eines innigen ternären Gemischs aus TiOₓ, Li_{z}Y und Kohlenstoff, worin
- x für eine Zahl zwischen 1 und 2 steht,
- z für 1 oder 2 steht und
- Y für einen aus CO₃, OH, O und TiO₃ ausgewählten Rest oder ein Gemisch davon steht; und
b) das Erhitzen der im vorhergehenden Schritt erhaltenen Dispersion auf eine Temperatur zwischen 400 und 1.000 °C,
wobei die Verfahrensbedingungen, insbesondere die Konzentrationsbedingungen der Komponenten des ternären Gemischs, das dispergiert wird, so gewählt werden, dass sie zu einer Umsetzung, vorzugsweise einer vollständigen Umsetzung, der Ausgangsprodukte L₁₄Ti₅O₁₂, Li(_{4-α)}Z_{α}Ti₅O₁₂ und Li₄ZβTi(_{5-β)}O₁₂ führen, wobei die Quelle des zumindest einen Metalls Z vorzugsweise in Schritt a) des Verfahrens in einer Menge zum Reaktionsgemisch zugesetzt wird, die vorzugsweise 0,1 bis 2 Gew.-%, bezogen auf die Masse des ternären Gemischs, entspricht.

2. Verfahren nach Anspruch 1, worin die Dispersion des ternären Gemischs auf eine Temperatur von etwa 600 °C erhitzt wird.

3. Verfahren nach Anspruch 2, worin die Dispersion in zwei Schritten erhitzt wird, wobei der erste Schritt erfolgt, bis die Dispersion eine Temperatur von etwa 400 °C erreicht, und der zweite Schritt bis zu einer Temperatur von etwa 600 °C erfolgt.

4. Verfahren nach Anspruch 3, worin der erste Schritt durch rasches Erhitzen auf eine Temperatur von etwa 400 °C, vorzugsweise über einen Zeitraum von 1 bis 4 h, erfolgt.

5. Verfahren nach Anspruch 3 oder 4, worin der zweite Schritt durch langsames Erhitzen über einen Zeitraum von vorzugsweise zumindest 4 h erfolgt.

6. Verfahren nach einem der Ansprüche 1 bis 5, worin die Dispersion des ternären Gemischs mit Hilfe von Wasser und/oder zumindest eines Lösungsmittels, das vorzugsweise ein organisches Lösungsmittel ist, hergestellt wird, wobei das organische Lösungsmittel vorteilhafterweise aus der aus Ketonen, gesättigten Kohlenwasserstoffen, ungesättigten Kohlenwasserstoffen, Alkoholen und Gemischen davon ausgewählt wird, wobei die Dispersion des ternären Gemischs noch bevorzugter mit Hilfe von Wasser, Aceton, Heptan, Toluol oder mit Hilfe eines Gemischs davon hergestellt wird.

7. Verfahren nach einem der Ansprüche 1 bis 6, **dadurch gekennzeichnet, dass** die Dispersion trocken ohne Lösungsmittel hergestellt wird.

8. Verfahren nach einem der Ansprüche 1 bis 7, **dadurch gekennzeichnet, dass** die Verbindung Li_{z}Y zumindest eine aus der aus Li₂O, Li₂CO₃ und LiOH bestehenden Gruppe ausgewählte Komponente umfasst.

9. Verfahren nach Anspruch 8, **dadurch gekennzeichnet, dass** die Verbindung Li_{z}Y ausschließlich Li₂CO₃ umfasst, wobei das Li₂CO₃ vorzugsweise in einer Menge von 25 bis 30 Gew.-%, bezogen auf die Gesamtmasse des ternären Gemischs, vorliegt.

10. Verfahren nach einem der Ansprüche 1 bis 9, worin die Dispersion durch mechanisches Zerkleinern, vorzugsweise durch mechanisches Zerkleinern mit hoher Energie, vorzugsweise trocken und durch Mahlen mit einer Kugelmühle, vorzugsweise mit einem Lösungsmittel, erhalten wird.

11. Verfahren nach einem der Ansprüche 1 bis 8, **dadurch gekennzeichnet, dass** das TiOₓ vom Anatas- oder Rutil-TiO₂-Typ oder ein Gemisch davon ist und dass das TiO₂ in dem ternären Gemisch vorzugsweise in einer Konzentration von 58 bis 71 Gew.-% vorliegt.

12. Verfahren nach Anspruch 11, **dadurch gekennzeichnet, dass** das TiOₓ vom Anatas-TiO₂-Typ ist.

13. Verfahren nach Anspruch 1, **dadurch gekennzeichnet, dass** die Verbindung Li_{z}Y Li₂TiO₃ umfasst, wobei das Li₂TiO₃ vorzugsweise in einer Menge von 43 bis 48 Gew.-%, bezogen auf die Gesamtmasse des ternären Gemischs, vorliegt.

14. Verfahren nach Anspruch 1, worin der Kohlenstoff des ternären Gemischs:
- aus der aus natürlichen oder künstlichen Graphiten, Rußen, Shawiniganblack, Ketjenblack und Koks bestehenden Gruppe ausgewählt ist und vorzugsweise zu Beginn der Herstellung der Dispersion des ternären Gemischs zum Reaktionsmedium zugesetzt wird;
- im Verlauf des Verfahrens vorzugsweise ausgehend von zumindest einem freien organischen Material, wie z.B. einem Polymer, das in dem Reaktionsmedium vorhanden ist, hergestellt wird; oder
- im Verlauf des Verfahrens auf der Oberfläche von Teilchen durch Kalzinierung eines abgeschiedenen organischen oder anorganischen Materials auf der Oberfläche von Li₄Ti₅O₁₂-Teilchen und/oder auf der Oberfläche von Teilchen auf Li₄Ti₅O₁₂-Basis und/oder auf der Oberfläche zumindest eines der zur Herstellung der Dispersion des ternären Gemischs eingesetzten Reaktanten gebildet wird.

15. Verfahren nach Anspruch 14, **dadurch gekennzeichnet, dass** der Ruß Acetylenschwarz und der Koks Petrolkoks ist.

16. Verfahren nach Anspruch 15, **dadurch gekennzeichnet, dass** der Kohlenstoff auf der Oberfläche des Reaktanten TiO₂ gebildet wird.

17. Verfahren nach einem der Ansprüche 1 bis 16, worin der Kohlenstoff in Form von Teilchen mit einer spezifischen Oberfläche von 2 m²/g oder mehr, vorzugsweise in Form von Teilchen mit einer spezifischen Oberfläche von 50 m²/g oder mehr, vorliegt.

18. Verfahren nach Anspruch 11, worin das als Ausgangsprodukt verwendete TiO₂ mit zumindest einem anorganischen Material beschichtet ist, vorzugsweise mit einem anorganischen Material, das vorzugsweise ein Aluminiumoxid und/oder ein Zirconiumoxid umfasst und das noch bevorzugter Al₂O₃ und/oder ZrO₂ umfasst.

19. Verfahren nach Anspruch 11, worin das eingesetzte TiO₂ mit einem anorganisch-organischen Hybridmaterial beschichtet ist.

20. Verfahren nach einem der Ansprüche 1 bis 17, worin die Teilchengröße des ternären Gemischs zwischen 100 nm und 10 µm liegt und vorzugsweise weniger als 1 µm und noch bevorzugter zwischen 200 und 300 nm beträgt.
